# EUROPEAN PATENT SPECIFICATION

(11) **EP 4 399 939 B1**
(45) Date of publication and mention of the grant of the patent: **04.11.2026**
(21) Application number: 22769790.1
(22) Date of filing: 09.09.2022
(51) Int. Cl.: H04W 76/19, H04W 76/27

(54) **METHODS AND APPARATUSES FOR UE IDENTITY SELECTION WITH INTER-CELL MTRP CONFIGURATIONS**
VERFAHREN UND VORRICHTUNGEN ZUR WAHL EINER UE IDENTITÄT IN INTER-ZELLEN MTRP KONFIGURATIONEN
PROCÉDÉS ET DISPOSITIFS POUR LA SÉLECTION D'UNE IDENTITÉ TERMINAL DANS CONFIGURATION INTER-CELLULE MTRP

(30) Priority: 10.09.2021 US 202163242744 P; 28.09.2021 US 202163249149 P
(43) Date of publication of application: 17.07.2024
(73) Proprietor: Telefonaktiebolaget LM Ericsson (publ), 164 83 Stockholm (SE)
(72) Inventor: DA SILVA, Icaro Leonardo, 170 77 Solna (SE); MÄÄTTANEN, Helka-Liina, 02360 Espoo (FI); RAMACHANDRA, Pradeepa, 589 29 Linköping (SE)
(74) Representative: Ericsson
(86) International application number: PCT/IB2022/058526
(87) International publication number: WO 2023/037318

(56) References cited:
- EP-A1- 2 922 364
- EP-A1- 3 624 547
- WO-A1-2014/182131
- US-A1- 2021 176 692
- "3rd Generation Partnership Project; Technical Specification Group Radio Access Network; Evolved Universal Terrestrial Radio Access (E-UTRA); Radio Resource Control (RRC); Protocol specification (Release 16)", 6 July 2021 (2021-07-06), XP052030854, Retrieved from the Internet <URL:https://ftp.3gpp.org/tsg_ran/WG2_RL2/Specifications/202106_final_specs_after_RAN_92/36331-g50.docx> [retrieved on 20210706]
- "3rd Generation Partnership Project; Technical Specification Group Radio Access Network; NR; Radio Resource Control (RRC) protocol specification (Release 16)", vol. RAN WG2, no. V16.4.1, 30 March 2021 (2021-03-30), pages 1 - 949, XP052000246, Retrieved from the Internet <URL:https://ftp.3gpp.org/Specs/archive/38_series/38.331/38331-g41.zip 38331-g41.docx> [retrieved on 20210330]
- SAMSUNG: "Summary of email discussion [Post113bis-e][061][feMIMO] InterCell mTRP and L1L2 mobility (Samsung)", vol. RAN WG2, no. electronic; 20210519 - 20210527, 11 May 2021 (2021-05-11), XP052007672, Retrieved from the Internet <URL:https://ftp.3gpp.org/tsg_ran/WG2_RL2/TSGR2_114-e/Docs/R2-2106314.zip R2-2106314 Summary[Post113bis-e][061][feMIMO] InterCell mTRP and L1L2 mobility.docx> [retrieved on 20210511]
- ERICSSON: "On L1/L2 centric inter-cell mobility", vol. RAN WG2, no. Electronic meeting; 20210519 - 20210527, 10 May 2021 (2021-05-10), XP052004026, Retrieved from the Internet <URL:https://ftp.3gpp.org/tsg_ran/WG2_RL2/TSGR2_114-e/Docs/R2-2105999.zip R2-2105999 - On L1 L2 centric inter-cell mobility.docx> [retrieved on 20210510]

## Description

### RELATED APPLICATIONS

This application claims the benefits of priority of U.S. Provisional Patent Application No. 63/249,149, entitled " UE identity in Re-establishment for UEs with inter-cell mTRP" and filed at the United States Patent and Trademark Office (USPTO) on September 28, 2021, and of U.S. Provisional Patent Application No. 63/242,744, entitled "Security token for rrc_inactive in inter-cell mTRP" and filed at the USPTO on September 10, 2021.

### BACKGROUND

### Re-establishment procedure and UE identification

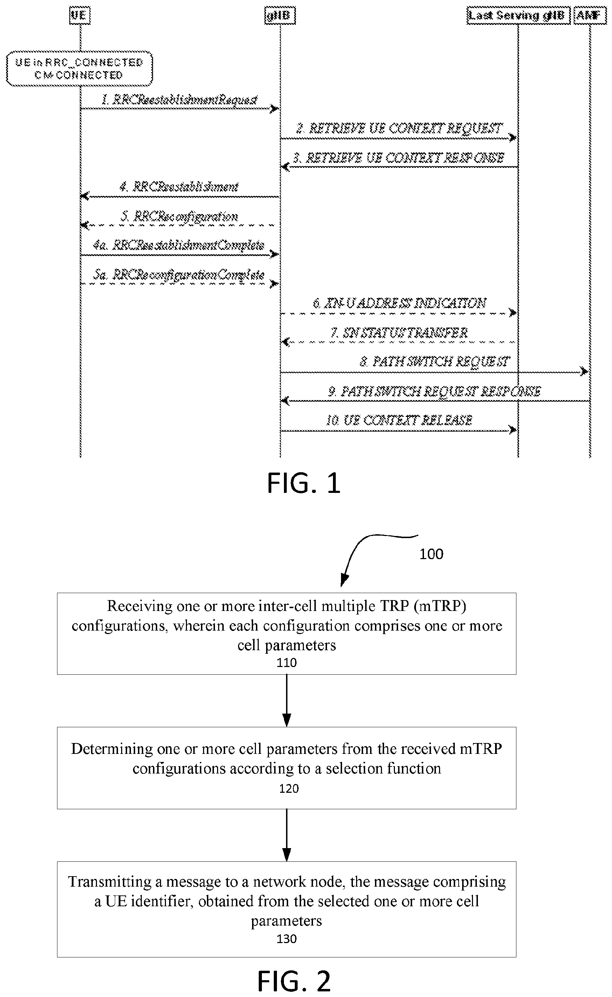

The Re-establishment procedure is a Radio Resource Control (RRC) procedure defined for New Radio (NR) in § 5.3.7 of Third Generation Partnership Project (3GPP) Technical Specification (TS) 38.331 (and summarized in § 9.2.3.3 of 3GPP TS 38.300). A User Equipment (UE) in RRC_CONNECTED may initiate the re-establishment procedure to continue the RRC connection when a failure condition occurs, e.g. radio link failure, reconfiguration failure, integrity check failure. The steps involved are shown below with reference to FIG. 1 (see also TS 38.331):
1. The UE re-establishes the connection, by sending a RRCReestablishmentRequest to the NR base station (e.g. gNB), for example. The UE may provide the UE Identity (e.g. Physical Cell identifier (PCI)+ Cell- Radio Network Temporary Identity (C-RNTI)) to the gNB where the trigger for the re-establishment occurred. In case re-establishment is triggered due to a Radio Link Failure (RLF), the cell the UE selects after the RLF has been declared and while timer T311 is running is the cell whose identity is sent to the gNB by the UE.
2. If the UE Context is not locally available, the gNB requests the last serving gNB to provide the UE Context data. That context fetching procedure has been introduced in Long Term Evolution (LTE), and from the first release of NR.
3. The last serving gNB provides the UE context data to the gNB (if requested, i.e., if not yet available at the gNB).
4/4a. The gNB continues the re-establishment of the RRC connection. The message is sent on Signalling Radio Bearer (SRB1).
5/5a. The gNB may perform the reconfiguration to re-establish SRB2 and Data Radio Bearers (DRBs) when the re-establishment procedure is ongoing.
6/7. If loss of user data buffered in the last serving gNB shall be prevented, the gNB provides forwarding addresses, and the last serving gNB provides the sequence number (SN) status to the gNB.
8/9. The gNB performs path switch.
10. The gNB triggers the release of the UE resources at the last serving gNB.

Further details of the UE actions during the re-establishment procedure are found in RRC. One aspect of interest for the present disclosure is how the UE identifies itself in an RRC Re-establishment Request message. This identification is required, so that the gNB can retrieve the UE context (in its own gNB memory or trigger a context fetching towards the last serving gNB) and re-establishes the connection by sending an RRC Re-establishment message (e.g. RRCReestablishment), for re-establishing SRB 1 and resume security (based on new keys derived from the new cell the UE re-establishes with), and the first RRC Reconfiguration after re-establishment (e.g. RRCReconfiguration) for re-establishing the DRBs. Some of these steps can be found in 3GPP TS 38.331.

The UE includes, as its UE identity in the RRC Re-establishment Request, the PCI of the Primary Cell (PCell) the UE was connected to prior to the failure (i.e. the PCI of the source PCell, in case of reconfiguration with sync or mobility from NR failure, or of the PCell in which the trigger for the re-establishment occurred (other cases, like integrity failure). The UE also includes the C-RNTI used in the source PCell (reconfiguration with sync or mobility from NR failure) or used in the PCell in which the trigger for the re-establishment occurred (other cases).

At the network side, these parameters (source PCI and source's C-RNTI) are used to identify the UE context in the gNodeB (gNB) the UE is trying to re-establish: a) in case the UE selects a cell for re-establishment that is in the same gNB as the cell the UE triggered re-establishment; or b) in case this is another gNB that has the UE context stored, e.g. during handover preparation, this is the gNB of a target cell; or c) this is another gNB which does not have the UE context and needs to fetch/retrieve it from the last serving gNB.

### Case b): Handover preparation including re-establishment information

When a source gNB is preparing a handover towards a target gNB, it sends an XnAP HANDOVER REQUEST message including an RRC context which comprises information assistance that the target gNB uses to identify the UE, in the case of a handover (HO) failure or RLF, followed by a re-establishment in the target gNB. In NR, the RRC context is encoded as the HandoverPreparationInformation message (defined in 3GPP TS 38.331) and includes the Information Element (IE) ReestablishmentInfo, where the source PCI is included. The source's C-RNTI is included in the RRC configuration.

### Case c): Context fetching during re-establishment

If the UE selects a cell which is not a prepared cell during re-establishment, the gNB with which the UE is trying to re-establish needs to fetch the context. For that, the gNB transmits an XnAP RETRIEVE UE CONTEXT REQUEST to the last serving gNB.

Also, it needs to have established a neighbour relation with the last serving gNB so that upon receiving the UE's PCI used in the source gNB (e.g. in the RRC Reestablishment Request message), the gNB with which the UE is trying to re-establish determines the last serving gNB from its neighbour relations and sends the XnAP RETRIEVE UE CONTEXT. In that message, it needs to include the UE Context ID, as defined in TS 38.423

### Suspend procedure and Radio Resource Control (RRC)_Inactive

The suspend procedure is defined in the 3GPP standard specification, for example, 3GPP TS 38.331. For example, a NR UE in RRC_CONNECTED is suspended by the network and enters RRC_INACTIVE upon the reception of the RRCRelease message including a suspend configuration (suspendConfig), as specified in TS 38.331.

### Resume procedure and security token Resume MAC-I

In addition to some of the RRC configurations, the UE stores upon entering RRC_INACTIVE/reception of the RRC Release with suspend configuration, some information of the cell the UE was connected to, such as the C-RNTI and the physical cell identity of the source PCell. As shown below, these parameters are later used when the UE attempts to resume a connection for calculating the so-called Resume Message Authentication Code-Integrity (MAC-I), which consists of a security token for a resume procedure that is used by the network to confirm that a given UE trying to resume is an authentic UE. The UE calculates the Resume MAC-I when initiating the resume procedure and includes it within the RRC Resume Request message. Upon reception, the target gNB (network node where the UE is trying to resume) forwards the Resume MAC-I to the last serving gNB (network node where the UE was latest suspended) so that the last serving gNB, using the stored security key and other parameters, can also compute the Resume MAC-I for that UE and verify this is an authentic UE. This is summarized in TS 38.300. The Resume operation and the calculation of the resume MAC-I aspects are shown in 3GPP TS 38.331. The UE variable *VarResumeMAC-Input* specifies the input used to generate the *resumeMAC-I* during RRC Connection Resume procedure. For example, the input can include the source C-RNTI, the target Cell identity and the PCI of the source cell.

In the security specifications, the calculation of the security token, Resume MAC-I, is described in section 6.8.2.1.3 of TS 33.501.

### Inter-cell multi-Transmit-Receive Point (mTRP) in Release (Rel)-17

When discussions in Rel-17 started in RAN2, the following agreements were made in RAN2#114e concerning the so-called Scenario 1: Inter-cell multi-TRP-like model:

### RAN2 confirm the simplified procedures on the inter-cell multi-TRP-like model as a baseline RAN2 understanding:

*Scenario 1: Inter-cell multi-TRP-like model*
*1. UE receives from serving cell, configuration of SSBs of the TRP with different PCI for beam measurement, and configurations needed to use radio resources for data transmission*/*reception incl resources for different PCIs.*
*2. UE performs beam measurement for the TRP with different PCI and report it to serving cell.*
*3. Based on the above reports, TCI state(s) associated to the TRP with different PCI is activated from the serving cell (by L1*/*L2 signaling).*
*4. UE receives and transmits using UE-dedicated channel on TRP with different PCI.*
*5. UE should be in coverage of a serving cell always, also for multi-TRP case, e.g. UE should use common channels BCCH PCH etc. from the serving cell (as in legacy).*

Discussion of Scenario 1 continued in RAN2#115 and the following sub-options were identified:

FFS whether common framework is feasible to support both "inter-cell beam management" and "inter-cell multi-TRP" considering differences/similarities between two operations.

R2 assumes at least TCI state information is required for TRP with different PCI. R2 further discuss RRC parameters based on RAN1 RRC parameters and/or R1 reply LS.

At R2 115-e the following RRC models is/were on the table: Option 1: Cell, Option 2: BWP, Option 3: beam resource (e.g. TCI state, QCL-info), Option 4: new structure (on high level similar to either of the other options).

These options (options 1 to 4) describe how the *"configurations needed to use radio resources for data transmission*/*reception including resources for different Physical Cell Identities (PCIs)"* is organized within the UEs dedicated RRC configuration.

RAN2 is currently discussing possible RRC models for configuring inter-cell mTRP for Rel-17, which might be also called inter-cell beam management operation. The options for the RRC models are summarized in the following:

### Option 1: Cell

In this option, TRP with different PCI is defined as an independent cell. The following aspects are summarized based on [R2-2107948], [R2-2108478], [R2-2108632]:
- This new cell is always "associated" with a legacy serving cell via the inter-cell mTRP operation. In Rel-17, the two cells share the same frequency.
- The secondary TRP cell (Assisting Cell) can have the same or different C-RNTI than the associated primary cell (Main cell).
- The configuration of the secondary TRP cells (Assisting Cell) for addition, modification, and release is done by RRC signaling.
- Every legacy serving cell (SpCell /SCell) can have an associated secondary TRP cell.
- When an Assisting Cell is used for Uplink (UL), Radio Link Management (RLM) should follow Assisting Cell signals (FFS whether this is part of Main cell (legacy serving cell) or as separate Assisting Cell RLM).

There could be different sub-options derived from Option 1, such as the following:
- Each inter-cell mTRP configuration has its own ServingCellConfig (so the UE is configured with multiple ServingCellConfig(s), one per TRP) and its own ServingCellConfigCommon (so the UE is configured with multiple ServingCellConfig(s), one per TRP);
- Each inter-cell TRP configuration has its own ServingCellConfig (so the UE is configured with multiple ServingCellConfig(s), one per TRP), but there is a single ServingCellConfigCommon, possibly associated to the initial PCell (the PCell the UE initially connects to and/or performs reconfiguration with sync).

### Option 2: Bandwidth Part (BWP)

In this option, TRP with different PCIs is modelled as additional BWP. The following aspects are summarized based on [R2-2107585] and [R2-2108632]:
- Configure the different TRP as the different BWP, and the TRP activation/deactivation can be achieved via the BWP switching mechanism.
- The common configuration would be kept for the source cell, i.e. the UE keeps monitoring the source cell's common channel.
- For the TRP with different PCI, it has the full set of the Physical Uplink Control Channel (PUCCH)/Physical Downlink Control Channel (PDCCH)/Physical Downlink Shared Channel (PDSCH)/Physical Uplink Shared Channel (PUSCH) (PxxCH) configuration, and the full set of common and dedicated configuration. Switching to TRP with different PCI is based on L1 signaling.

### Option 3: Beam resource (e.g. TCI state, Quasi-co-located (QCL)-information)

In this option, TRP with different PCI is modelled as a dedicated resource to enable separate beam, i.e. separate Transmission Configuration Indicator (TCI)-state/QCL-information. The following is based on [R2-2107906], [R2-2108632], [R2-2108656], [R2-2108807]:
- The additional Synchronization Signal Block (SSB) set(s) from a non-serving cell (TRP with different PCI) is configured within the serving cell configuration and associated with an index. This index can then be used for associating TCI states, Channel State Information (CSI) measurement configurations, potential UL configurations, etc. with the additional SSB set (PCI).
- TCI state is also configured in the serving cell configuration but assigned with SSB index associated to the different PCI.
- In inter-cell multi-TRP operation, the CORESETPoolIndex with value 0 is associated with the serving cell, while CORESETPoolIndex with value 1 is associated with the non-serving cell.
- All other configuration in BWP could be shared by a neighbor cell except for Physical (PHY) dedicated channels (PxxCH).
- Cell-specific parameters for neighbor TRPs/Cells are shared with the source cell or cell-specific parameters are not needed on the neighbor TRPs/Cells, e.g. Random Access Channel is not needed on the neighbor cell and RACH is triggered by PDCCH-command if needed. It is assumed that Timing Advance (TA) is always aligned between source and neighbor cells.
- SSB related information of the non-serving PCI is included in the CSI configuration to configure CSI for TRP with different PCI.

One sub-option derived from Option 3 is the following:
- The inter-cell mTRP configurations are within a single ServingCellConfig and there is a single ServingCellConfigCommon, even though there may be PCI-specific configurations.

### Option 4: New structure

In [R2-2107415], a new approach is proposed, in which a new Information Element (IE), e.g. *NonServingCellConfig,* is defined to include all non-serving cell information (i.e. TRP with different PCI).
- Non-serving cell SSB information (at least SSB time domain position, SSB transmission periodicity, SSB transmission power) is needed in inter-cell MTRP operation.
- PCI of non-serving cell is included in the new IE (e.g. NonServingCellConfig) for non-serving cell.
- An index of non-serving cell with corresponding configurations is introduced to associate with TCI state.

In Options 1 and 2, all physical layer configuration parameters may be set differently among the TRPs while in Option 3, most parameters are shared. Option 4 is Abstract Syntax Notation (ASN1) coding specific hybrid which may coincide with Option 1 or Option 3.

Despite the differences in the RRC model for inter-cell mTRP/inter-cell beam management, what all these options have in common is that the UE is configured with multiple PCI(s) and/or multiple C-RNTI(s), even for the same serving frequency.

### Inter-cell multi-TRP (mTRP) in Rel-18 and possibly 6G

In the last Radio Access Network (RAN) plenary meeting, the scope of Rel-18, currently called 5G Advanced is being discussion. Inter-cell beam management is one of the main topics in the area of mobility enhancements. Although it is not clear what exact solution would be adopted in Rel-18 in comparison to Rel-17 for inter-cell mTRP, one possible difference is that while in Rel-17 the UE relies on control channels from a single serving cell, while it possibly receives/transmits data from/to other cells (dedicated channels having TCI state whose QCL source is associated with a reference signal with a PCI of that other cell), in Rel-18 it might also be possible to use common channels from these other cells. For example, Rel-17 may end up modeling inter-cell mTRP as in Option 3, while Rel-18 will model the inter-cell mTRP as in Option 1. However, these differences may not be fundamental for this disclosure, i.e., the disclosure is likely applicable in Rel-17 scenario, but also in a possible Rel-18 scenario for inter-cell mTRP.

In 5G times, some topics from the 4G evolution made in the first 5G release (Release-15). It may also happen that 5G evolution topics, e.g., from 5G advanced, become part of the 6G standard. Inter-cell beam management/inter-cell mTRP are topics that may gain some attention in 6G times. And, if one solution is adopted in 5G evolution, another solution may be adopted in 6G.

Document 3GPP TS 36.331 discloses the Radio Resource Control protocol for the radio interface between UE and E-UTRAN as well as for the radio interface between RN and E-UTRAN. The document also includes: the radio related information transported in a transparent container between source eNB and target eNB upon inter eNB handover; and the radio related information transported in a transparent container between a source or target eNB and another system upon inter RAT handover. The RRC protocol is also used to configure the radio interface between an IAB-node and its parent nodes as specified in TS 38.300.

Document US 2021 / 0 176 692 A1 discloses a wireless device and a method for re-establishing a connection in a wireless communications network comprising a first RAT and a different second RAT. The wireless device operates in a first cell of the first RAT. When a connection failure with the first cell is detected, the device performs a cell selection and selects a second cell of the second RAT. Further, the device determines a first set of parameters associated with the first cell and comprising at least one parameter identifying the wireless device or the first cell. Furthermore, the device receives a second set of parameters associated with the second cell and comprising at least one parameter identifying the wireless device or the second cell. The device determines a security token based on the first and second sets, and transmits a re-establishment request message comprising the security token to the second cell.

Document EP 3 624 547 A1 discloses a communication technique for convergence of IoT technology and a 5G communication system for supporting a higher data transfer rate beyond a 4G system, and a system therefor. The document can be applied to intelligent services (e.g., smart homes, smart buildings, smart cities, smart or connected cars, health care, digital education, retail business, and services associated with security and safety) on the basis of 5G communication technology and IoT-related technology. Disclosed are a method and an apparatus for improving mobility-related performance when a dual connectivity is performed using dual RRC.

Document 3GPP TS 38.331 V16.4.1 discloses the Radio Resource Control protocol for the radio interface between UE and NG-RAN. The document also includes: the radio related information transported in a transparent container between source gNB and target gNB upon inter gNB handover; the radio related information transported in a transparent container between a source or target gNB and another system upon inter RAT handover; and the radio related information transported in a transparent container between a source eNB and target gNB during E-UTRA-NR Dual Connectivity. The RRC protocol is also used to configure the radio interface between an IAB-node and its parent node.

Document EP 2 922 364 A1 discloses a base station method, a base station, a user equipment method, user equipment and computer program products. The base station method comprises: when it is determined that a user equipment has been configured for dual connectivity with the base station, maintaining configuration information for a radio resource control connection with a master base station also configured for dual connectivity with the user equipment for utilisation in response to a radio resource control connection re-establishment request from the user equipment. In this way, the base station is able to keep, retain or store the context configuration for the RRC connection with the base station so that the base station is prepared for the arrival of the user equipment triggered by an RRC connection re-establishment request from the user equipment, which may occur in a variety of different circumstances such as, for example, detecting a radio link failure.

### SUMMARY

There currently exist certain challenge(s). When configured with inter-cell mTRP, the UE receives configuration of SSBs of the TRPs with different PCIs (compared to the initial PCell) for beam measurement, and configurations needed to use radio resources for data transmission/reception including resources for the different PCIs. It can be said that the UE is receiving/transmitting data from/to from physical channels (such as PDCCH, (PDSCH, PUSCH, PUCCH) whose respective TCI states (indicating the associated DL beams) are associated to different cells; in other words, the TCI state configurations, with which the UE is configured, may be using reference signals (e.g. SSBs) having different PCIs.

Hence, when such a UE is configured with inter-cell mTRP and detects an event which leads to the initiation of an RRC Re-establishment procedure (e.g. an Master Cell Group (MCG) RLF), the UE needs to set its UE identity in an RRC Reestablishment Request (i.e. an RRCReestablishmentRequest in NR). In state of the art, that UE identity comprises the PCI of the source PCell (in case of reconfiguration with sync or mobility from NR failure) or of the PCell in which the trigger for the re-establishment occurred (other cases). However, if configured with inter-cell mTRP, it is ambiguous which PCI the UE shall include to identify itself in the RRC Reestablishment Request. The consequence of such ambiguity is that the gNB may not find the UE context and thus the re-establishment procedure will fail (especially in case the gNB that the UE tries to re-establish with is not the same gNB that the UE has failed at). In that case, the gNB needs to transmit an RRCSetup in response (fallback), which will move the UE to RRC_IDLE (or wait for the expiry of timer T301). This leads to a re-start of a connection that would take much longer timer and consume more resources (as more signaling is required).

In addition, this is problematic for a source gNB which is trying to prepare a target gNB for a potential re-establishment by transmitting the RRC context in the HANDOVER REQUEST message over XnAP, as the UE configured with inter-cell mTRP is configured with multiple PCIs in the PCell and it is not clear which one is to be used for identifying the UE.

This is also problematic for a gNB that the UE is trying to re-establish with when the UE context is not available, so that the gNB needs to retrieve the UE context. In that case, it is not clear how the gNB sets the UE context ID in the UE CONTEXT RETRIEVE REQUEST message as the UE configured with inter-cell mTRP has a PCell with multiple PCIs.

Being associated with different cells/PCIs for inter-cell mTRP also opens for a possible design in 3GPP where the UE uses different C-RNTIs for the different cells. Though this is not settled in 3GPP yet for Rel-17 for inter-cell mTRP, it may likely be introduced in Rel-18, especially considering that Rel-18 solution may rely on cells from different Distributed Units (DUs), in a split RAN architecture. If the UE ends up being configured with multiple C-RNTIs for the PCell, for inter-cell mTRP, an ambiguity also exists, as the C-RNTI in the PCell is also used as part of the UE identification during re-establishment. In the context of the Options 1 to 4 currently being discussed in 3GPP for Rel-17, the most likely cases where C-RNTI would be different is in Option 1 and Option 4.

It should be noted that the re-establishment procedure can comprise a resume procedure.

Similarly, for the resume procedure, when a UE configured with inter-cell mTRP receives a message to transition to RRC_INACTIVE (RRC Release including a suspend configuration, e.g. suspendConfig) it is ambiguous which PCI the UE shall store and, consequently, it is ambiguous which PCI is to be used to calculate the Resume MAC-I to be included in an RRC Resume Request message when the UE tries to resume. As described above, when the UE is suspended, the UE stores the PCI and the C-RNTI of the source cell. The consequence of such ambiguity is the lack of common understanding between the UE and the network when calculating the Resume MAC-I to authorize the resume for that UE. The lack of common understanding may lead to the network not accepting the resume request of a legitimate UE, that has been previously authenticated. Consequently, the network would trigger a fallback procedure where RRC_INACTIVE UEs would have to transition to RRC_IDLE and trigger a Setup procedure, which consumes more signaling, more UE power and takes longer time to get to RRC_CONNECTED and re-start data transmission/reception.

This is not an issue in legacy because the UE always has a single PCell, with its single associated PCI. There are other forms of multi-connectivity in the current specifications, such as Carrier Aggregation (CA) and Multi-Radio Dual Connectivity (MR-DC). However, in both cases the PCell is always in a single primary frequency (e.g. SSB frequency associated to a single Absolute Radio Frequency Channel Number (ARFCN)) while a Secondary Cell (SCell), in the case of CA, and a PSCell (Secondary SpCell), in the case of MR-DC, are in a different frequency.

Certain aspects of the disclosure and their embodiments may provide solutions to these or other challenges. The invention is defined by the subject-matter of the independent claims.

Generally stated, the embodiments allow a wireless device/UE for identifying its identity in the re-establishment procedure or to calculate a security token (Resume MAC-I) for resuming the operation from a power saving mode (RRC_INACTIVE) to a connected mode (RRC_CONNECTED). The UE, configured with inter-cell mTRP configuration(s), where the inter-cell mTRP configuration(s) comprises multiple PCI(s) (e.g. PCI-1, PCI-2, ..., PCI-N), sets the UE identity to include one or more PCIs from the inter-cell mTRP configuration(s), e.g. a subset of the configured PCIs for inter-cell mTRP. In the disclosure, this selection of PCI(s) to be used for UE identification is called a selection function. For example, the calculation of the security token is based on at least one stored cell parameter from cells configured for inter-cell mTRP, upon initiating the attempt to resume from the power saving mode to the connected mode.

The embodiments also include the inter-cell mTRP configuration(s), comprising multiple C-RNTI(s) (e.g. C-RNTI-1, C-RNTI -2, ..., C-RNTI -N), so the UE sets the UE identity to include one or more C-RNTI(s) from the inter-cell mTRP configuration(s), e.g. a subset of the configured C-RNTI(s) for inter-cell mTRP. In the disclosure, this selection of C-RNTI(s) to be used for UE identification is called a selection function.

The disclosure also includes a network node with which the UE tries to perform re-establishment, in different scenarios. A first scenario is a source network node transmitting a handover request to a target network node, where the source network node prepares the target network node with re-establishment information including the UE identity selected according to the selection function, for a UE configured with inter-cell mTRP. A second scenario is the UE context retrieval case, where the network node with which the UE is trying to re-establish does not have the UE context and needs to fetch it, by transmitting a UE context retrieve request message to the last serving network node including the UE identity, for a UE configured with inter-cell mTRP, selected according to the selection function.

According to the present disclosure, there are provided a method, a UE and a computer program product according to the independent claims. Further developments are set forth in the dependent claims.

According to a first aspect of the present disclosure, there is provided a method performed by a user equipment, UE. The method comprises receiving, from a first network node, one or more inter-cell multiple Transmission Reception Point, mTRP, configurations, wherein each inter-cell mTRP configuration comprises (i) multiple Physical Cell Identities, PCIs, being different to one another compared to an initial Primary Cell, PCell, and (ii) multiple Cell-Radio Network Temporary Identities, C-RNTIs, being different to one another compared to the initial PCell; determining, from the received inter-cell mTRP configurations according to a selection function, at least one combination of one PCI and one C-RNTI enabling retrieving a UE context, wherein the selection function is based on selecting the at least one combination of one PCI and one C-RNTI only from the initial PCell, by selecting the PCI and the C-RNTI of the initial PCell; and transmitting a radio resource control, RRC, re-establishment Request message to the second network node, the RRC re-establishment Request message comprising a UE identity comprising the selected at least one combination of one PCI and one C-RNTI.

According to a second aspect of the present disclosure, there is provided a User Equipment, UE, comprising communication interfaces and processing circuitry connected thereto and configured to perform the method of the first aspect.

According to a third aspect of the present disclosure, there is provided a computer program product comprising a non-transitory computer readable storage medium having computer readable program code embodied in the medium. The computer readable program code comprises computer readable program code to operate a user equipment, UE, according to the first aspect.

Certain embodiments may provide one or more of the following technical advantage(s).

The embodiments herein solve the ambiguity between UE and the network for identifying the UE context and successfully continuing a re-establishment procedure, in the context of mTRP. With the embodiments, it is possible to identity the UE context of a UE trying to re-establish the connection with the network, even if the UE is configured with inter-cell mTRP and possibly has multiple PCIs and/or multiple C-RNTI(s) associated to the PCell (e.g. cells in the same serving frequency as the PCell).

Without the present disclosure, the consequence of such ambiguity is that the network node (or gNB) the UE is trying to re-establish with, may not find the UE context and thus the re-establishment procedure will fail. In that case, the gNB needs to transmit an RRCSetup in response (fallback) which will move the UE to RRC_IDLE (or wait for the timer T301 expiry), taking much longer timer and consuming more resources (as more signaling is required) to re-start a connection. Hence, this disclosure provides a much faster way to re-connect the UE to the network, as the re-establishment procedure will not fail.

In addition, without the disclosure, it would have been problematic for a source gNB, which is trying to prepare a target gNB for a potential re-establishment by transmitting the RRC context in the HANDOVER REQUEST message over XnAP, as the UE configured with inter-cell mTRP is configured with multiple PCIs in the PCell and it is not clear which one is to be used for identifying the UE. Thanks to the embodiments herein, it is possible to properly prepare network nodes during a handover procedure in case the procedure fails, i.e. the UE could successfully perform a re-establishment and re-connect to the network in a faster manner (compared to the case the UE needs a connection setup via an RRC_IDLE to RRC_CONNECTED transition).

In addition, it is problematic for a gNB the UE is trying to re-establish with, when the UE context is not available, so that the gNB needs to retrieve the UE context. Without the embodiments herein, it would have been not clear how the gNB sets the UE context ID in the UE CONTEXT RETRIEVE REQUEST message, as the UE configured with inter-cell mTRP has a PCell with multiple PCIs. With the embodiments herein, a network node with which the UE is trying to re-establish is capable of retrieving the UE context in the correct network node.

The embodiments also solve the ambiguity between the UE and the last serving gNB (or any other network entity and/or network node hosting the UE AS Inactive context and/or network node that needs to authenticate the UE for the purpose of providing the context to the target node the UE is trying to resume) for calculating the security token (Resume MAC-I) for authenticating the UE during a resume procedure.

The consequence of such ambiguity is the lack of common understanding between the UE and the network, when calculating the Resume MAC-I, which may lead to the network not accepting the resume request for that UE trying to resume and indicating this fact to the target gNB with which the UE is trying to resume. Upon receiving the indication of non-acceptance, the target gNodeB will either trigger a fallback procedure (transmit RRCSetup in response to the RRC Resume Request) or wait for the expiry of Timer T319, and in both cases the UE goes to RRC_IDLE and deletes its UE context. Hence, without the embodiments of the present disclosure, every time the UE enters RRC _INACTIVE while it is configured with inter-cell mTRP, the UE will transition to RRC_IDLE when it tries to resume, making RRC _INACTIVE malfunctioning for UEs configured with mTRP (which increases UE signaling during the transition to RRC_CONNECTED and more power consumption).

One solution could have been to de-configure inter-cell mTRP every time before transitioning the UE to RRC_INACTIVE, to prevent the ambiguity. However, that would lead to two issues not created by the present disclosure: 1) Higher signaling every time the UE is suspended; or/and 2) The impossibility to suspend and resume inter-cell mTRP configurations, which would lead to higher signaling upon resume for UEs capable of inter-cell mTRP.

The embodiments of the present disclosure do not create such issues.

### BRIEF DESCRIPTION OF THE DRAWINGS

Exemplary embodiments will be described in more detail with reference to the following figures, in which:
FIG. 1 shows a signal diagram for the re-establishment procedure according to an example.
FIG. 2 illustrates a flow chart for a method in a UE, according to an embodiment of the present disclosure.
FIG. 3 shows a UE operating inter-cell mTRP according to an example.
FIG. 4 is a flow chart of a method in a UE, for a re-establishment procedure, according to an embodiment of the present disclosure.
FIG. 5 is a flow chart of a method in a UE, for a resume procedure, according to an example.
FIG. 6 is a flow chart of a method in a network node, according to an example.
FIG. 7 is a signal diagram for the re-establishment procedure, where the UE tries to re-establish at the same network node as the last serving network node, according to an embodiment of the present disclosure.
FIG. 8 illustrates a signal diagram for the re-establishment procedure, where the UE tries to re-establish at a network node that is different from the last serving network node, but the network node is prepared, according to an embodiment of the present disclosure.
FIG. 9 illustrates a signal diagram for the re-establishment procedure, where the UE tries to re-establish at a network node that is different from the last serving network node, but the network node is not prepared, according to an embodiment of the present disclosure.
FIG. 10 illustrates a signal diagram of the resume procedure, according to an example.
Fig. 11 shows an example of a communication system, according to an example.
Fig. 12 shows a schematic diagram of a UE, according to an embodiment of the present disclosure.
Fig. 13 shows a schematic diagram of a network node, according to an example.
Fig. 14 illustrates a block diagram of a host according to an example.
Fig. 15 illustrates a block diagram illustrating a virtualization environment according to an example.
Fig. 16 shows a communication diagram of a host according to an example.

### ADDITIONAL EXPLANATION

### Initial disclaimers/ definitions

In the disclosure, the term "UE context" corresponds to any of the following or combinations of the following: i) the UE's RRC configuration for the different layers of the protocol stack, such as any parameter or sets of parameters that may be included in an RRCReconfiguration, RRCResume, RRCSetup message as defined in TS 38.311 and/or; ii) parameters the UE is configured with for operation with the RAN, for configuring layers in the protocol stack such as the Physical Layer, the Medium Access Control (MAC) layer, the Radio Link Control (RLC) layer, the Packet Data Convergence Protocol (PDCP) layer, the SDAP layer; iii) state variables (e.g. timer values, counter values) for the UE's operation in the RAN, for configuring layers in the protocol stack, such as the Physical Layer, the MAC layer, the RLC layer, the PDCP layer, the SDAP layer; iv) UE's security context, including at least security keys (e.g. KgNB, S-KgNB, integrity protocol key(s), ciphering key(s)), security counter(s), e.g. Next hop Chaining counter (NCC), S-K Counter, security capabilities; v) UE's capabilities, e.g. from the RAN's perspective, called radio capabilities.

The term "PCI" corresponds to a cell identifier, such as the one encoded by the one or more synchronization sequences, e.g. the Primary Synchronization Sequence (PSS) and the Secondary Synchronization Sequence (SSS). One example is the PCI defined in the NR specifications, such as in TS 38.311.

The term "C-RNTI" corresponds to a UE identifier in the MAC layer and/or used for scheduling the UE and/or obtained via a random access procedure (e.g. in the Random Access Response message) or via an RRCReconfiguration (e.g. as part of a reconfiguration with sync procedure, in the IE ReconfigurationWithSync).

The terms "TCI state" and "TCI state ID" are used to refer to the TCI state configuration and a TCI state identity/ identifier as defined in the NR specifications, e.g. TS 38.331 and/or TS 38.213. However, the present disclosure is also applicable to any indication of a Downlink Beam (beam indication) that indicates to the UE that it needs to monitor a given Reference Signal (RS), transmitted in a spatial direction, where that spatial direction can be called a "beam". In the case of a TCI state, that has an associated QCL configuration, which may comprise a RS configuration.

The term "beam" used in the disclosure can correspond to a RS that is transmitted in a given spatial direction. Or the other way around: when a RS is described, that may be a RS that is beamformed, i.e. it may correspond to a beam. For example, a beam or an RS may refer to an SS/PBCH Block (SSB) or layer 3 configured CSI-RS. During a half-frame, different SSBs may be transmitted in different spatial directions (i.e. using different beams, spanning the coverage area of a cell). That corresponds to different SSBs meaning different beams.

Now turning to FIG. 2, a method 100 at a UE for re-establishing (or resuming) a connection with a network node will be described, in the context of inter-cell mTRP. Method 100 may comprise:
Step 110: Receiving one or more inter-cell multiple TRP (mTRP) configuration(s), wherein each configuration comprises one or more cell parameters.
Step 120: Determining one or more cell parameters from the received mTRP configurations according to a selection function.
Step 130: Transmitting a message (e.g. re-establishment (or resume) request message) to the network node, the message comprising a UE identifier, which is based on (or obtained from) the selected one or more cell parameters.

The different steps of method 100 will be described in more detail below.

### Step 110: Receiving inter-cell multiple TRP (mTRP) configuration(s)

In this step, the UE receives the one or more inter-cell multiple TRP (mTRP) configuration(s), where each configuration comprises at least one cell parameter. These configurations are received from the network, more specifically from the network node (e.g. a gNB) the UE is connected to when it is configured.

The inter-cell multiple TRP (mTRP) configuration(s) may be provided as any of the options discussed for inter-cell mTRP/ inter-cell beam management in Rel-17 and may also be applicable for the release 18 solution (in case a different solution is adopted).

Despite the differences in the RRC model(s) for inter-cell mTRP/inter-cell beam management, which may possibly become a solution in Release 17 and/or Release 18, all these options have in common the fact that the UE is configured with multiple PCI(s) and/or multiple C-RNTI(s), for the same serving frequency.

In one example, cell parameter(s) of inter-cell mTRP configuration(s) are given within a PCell (and SCell) configuration, such as within the SpCell configuration. In one option, that is the Common cell configuration (e.g. IE ServingCellConfigCommon); in another option, that is the dedicated/UE-specific configuration (e.g. IE ServingCellConfig for the SpCell). In that case, a single cell configuration is given, but it could be associated to multiple PCIs. As an example, when the inter-cell mTRP configurations are associated with a single ServingCellConfig, the same serving cell configuration can be associated to more than one PCI. This is Option 3 of RAN2 agreement. In another example, the inter-cell mTRP configurations may be associated with multiple ServingCellConfig(s). This is Option 1 of RAN2 agreement.

In one example, the inter-cell mTRP configuration(s) include a cell parameter which is given as beam information for the added PCI.

In another example, each inter-cell mTRP configuration is provided as a cell configuration, e.g. SpCellConfig (or as an SCellConfig or as a new IE for configuring additional cells for inter-cell mTRP), i.e., the UE receives multiple cell configuration(s) for inter-cell mTRP operation, and each cell parameter (e.g. PCI and/or C-RNTI) is comprised within each cell configuration.

In one example, the cell parameter is a cell identifier (e.g. a PCI). The cell identifier can be used to identify the UE context location at a network node (last serving network node).

In one example, the cell parameter can be a MAC layer identifier for the UE, such as a C-RNTI. The C-RNTI can be used to identify the UE context location at a network node (last serving network node).

In one example, the mTRP configurations comprise the configurations of at least two TCI states whose RSs configured as QCL sources are from different cells and encode different PCIs. In this case, the at least one cell parameter (or the one or more cell parameters) corresponds to the PCI. Here is an example for this case:

### Inter-cell mTRP configurations

- TCI state configuration 1
   - QCL source
      - RS from cell A (PCI a)
- TCI state configuration 2
   - QCL source
      - RS from cell B (PCI b)
- Different cells A and B
- Different PCls a and b

In another example, the mTRP configurations comprise the configurations of at least two C-RNTIs (or in more general terms, two UE identifiers associated to different cells), where each C-RNTI is used for data transmissions/reception associated to each cell. Hence, if two cells/PCIs are configured for inter-cell mTRP, the UE can be configured with two C-RNTIs. In this case, the at least one cell parameter/one or more cell parameters corresponds to the C-RNTI.

In another example, the configurations comprise the mTRP configurations of at least two cells for inter-cell mTRP (e.g. possibly called non-serving cells, additional serving cells, neighbour cells for inter-cell mTRP), where each cell for inter-cell mTRP is indexed within a TCI state configuration, e.g. by a cell identifier or cell index present in both the TCI state configuration and the cell configuration. Each cell configuration may comprise cell parameters (e.g. cell-specific parameter) such as PCI, C-RNTI (and any other parameter possibly included within the IE ServingCellConfig or ServingCellConfigCommon). Here is an example for this case:

### Inter-cell mTRP configurations

- Configuration of cell A for inter-cell mTRP
   - PCI a
   - Cell index
   - C-RNTI for transmissions with cell A
- Configuration of cell B for inter-cell mTRP
   - PCI b
   - Cell index
   - C-RNTI for transmissions with cell B
- Different cells A and B

In another example, the mTRP configurations may comprise the configurations of at least one cell configuration with one C-RNTI, but additional SSB/PCIs for inter-cell mTRP.

In the context of this disclosure (e.g. according to Option 1) for a UE capable of inter-cell mTRP, that cell is considered to be the initial PCell (or current PCell, which can be referred to as the first cell, or the initial cell, or initial PCell as well). The first PCell is the cell the UE is camping when the UE performs connection establishment/setup, when transitioning from RRC_IDLE to RRC_CONNECTED, or connection resume, transitioning from RRC_INACTIVE to RRC_CONNECTED, where the first cell has a first PCI associated to that PCell. It is the cell the UE performs random access with when transitioning to RRC_CONNECTED. In the multi-beam scenario, a cell can be associated to multiple SSBs, and during a half-frame, different SSBs may be transmitted in different spatial directions (i.e. using different beams, spanning the coverage area of a cell).

In this disclosure (e.g. according to Option 1) the term "additional PCell(s)" is used to refer to the cells in addition to the PCell from which the UE can perform inter-cell mTRP operation. These are the cells whose RSs are used as QCL of TCI states of the UE's physical channels configurations. They may also be called non-serving cells for mTRP (or inter-cell mTRP), or additional serving cells.

According to Option 3, the UE has only one PCell and the PCI initially associated to that PCell can be considered as the first cell or initial cell or initial PCell or initial PCI. Using the term cell here is not accurate (although possible). Then, similar to above, the additional PCI comes with SSB that is used as QCL of TCI states of the UE's physical channels configurations. They may also be called non-serving cells for mTRP (or inter-cell mTRP), or additional serving cells.

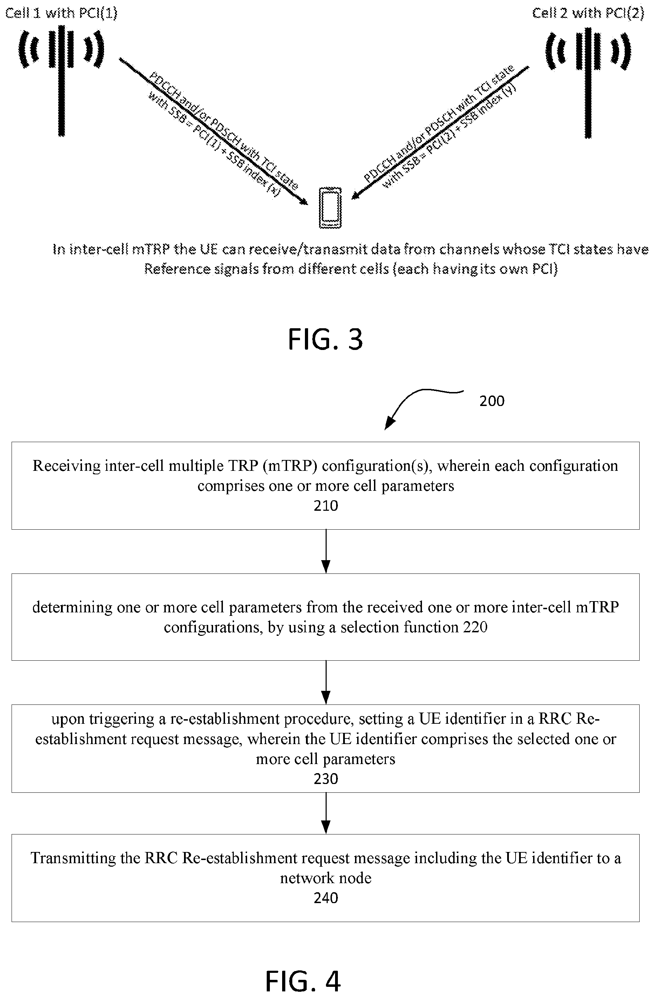

Even though the term "inter-cell mTRP" has the term "inter-cell", a fundamental aspect is that the UE is configured with physical channels (e.g. PDCCH, PDSCH, PUCCH, PUSCH) whose TCI states (corresponding to downlink beam indications for monitoring the channel(s)) may be activated simultaneously, where the TCI states may have reference signals (e.g. SSBs) for its quasi-co-location configurations whose PCIs are associated to different cells, as shown in FIG. 3.

Now, some configurations of TCI will be described.

### Configuring TCI state and quasi-co-locations from different cells/PCls

The inter-cell mTRP configuration comprises the configuration of one or multiple TCI states, where each TCI state is associated to a Reference Signal (e.g. represented by an SSB index), where the different RSs from the different TCI states may be from different cells (i.e. may encode different PCIs).

For inter-cell mTRP, the UE with the initial PCell (having its initial PCI) is configured with the additional PCIs (e.g. PCI-2, PCI-3, PCI-4), where each additional PCI, or equivalently stated, any SSB beam related to the additional PCI, can be used as a QCL source in a TCI state the UE is configured with. Each additional PCI can be of a cell that may be a non-serving cell in the same PCell frequency, a serving cell or non-serving cell that may become activated when the UE operates with inter-cell mTRP.

In conventional systems, the UE assumes that the QCL source of a TCI state is a RS associated with the serving cell's first/initial PCI (i.e. the PCI in ServingCellConfigCommon). In inter-cell mTRP, the UE can be configured with different PCI(s)(SSB of different PCI) in the TCI state configuration. An example where another PCI is added to the TCI state is shown below:

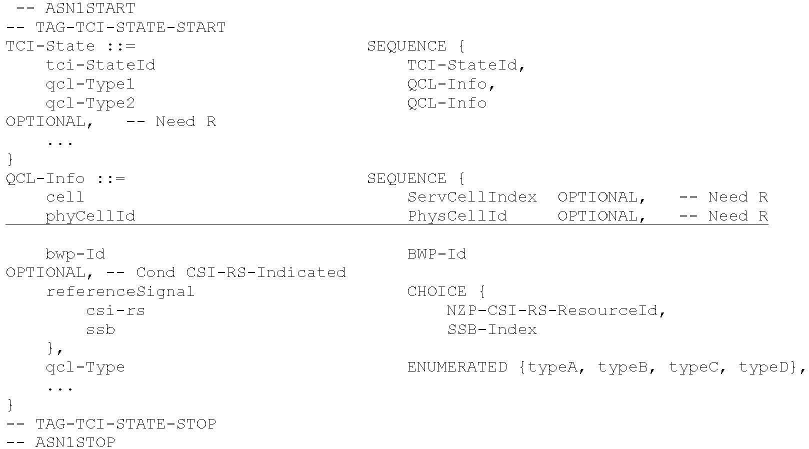

| ***QCL-Info* field descriptions** |
|---|
| [...] |
| ***phyCellId*** |
| Physical cell identity associated to the reference signal confiqured as QCL source |
| [...] |

One possible solution for this signaling is that the absence of *phyCellId* indicates to the UE that the PCI to be assumed is the PCI included in ServingCellConfigCommon, for that configured TCI state.

There could be other solutions to associate an additional PCI to a QCL source of a TCI state, for example, a nested signaling where for each PCI the UE is configured with a list of TCI state configurations.

In one solution, the QCL information configuration of a TCI state configuration contains a reference/pointer to the cell the reference signal indicated is associated to, where the reference/pointer is the PCI and ARFCN of the non-serving cell, as shown below:

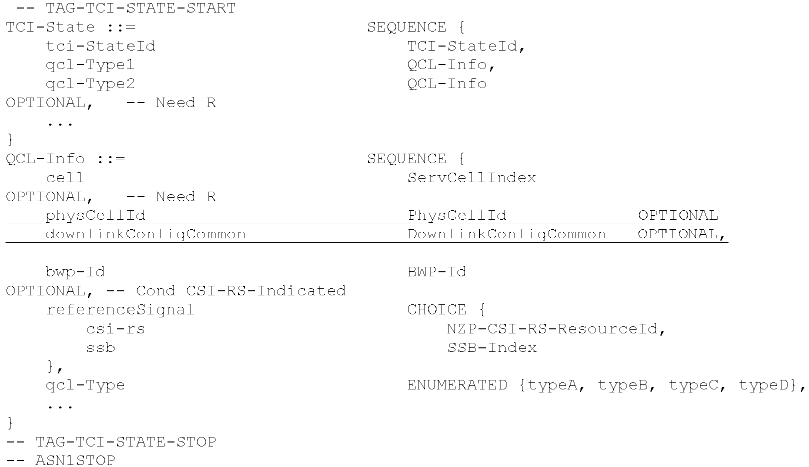

| ***QCL-Info* field descriptions** |
|---|
| [...] |
| ***physCellId*** |
| PCI of a non-serving cell in which the *referenceSignal* is configured. The field is absent if the *referenceSignal* is configured for a serving cell |
| ***downlinkConfigCommon*** |
| Downlink frequency information of a non-serving cell in which the *referenceSignal* is configured |

In another solution, the QCL information configuration of a TCI state configuration contains a reference/pointer to the cell the reference signal indicated is associated to, where the reference/pointer is a non-serving cell index, as illustrated below: 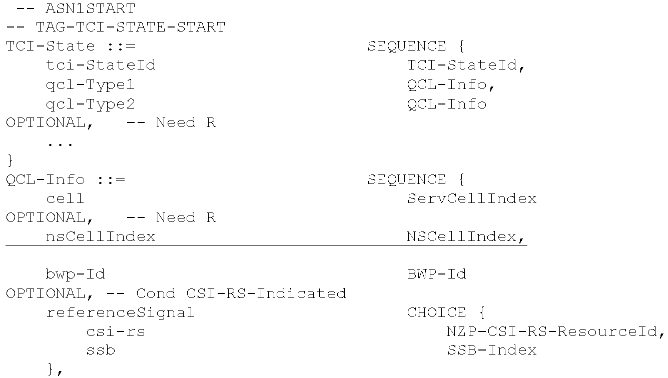 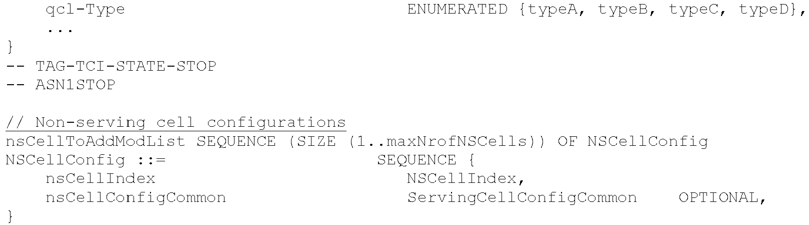 [...]

| ***QCL-Info* field descriptions** |
|---|
| [...] |
| ***cell*** |
| The UE's serving cell in which the *referenceSignal* is configured. If the field is absent, it applies to the serving cell in which the *TCI-State* is configured. The RS can be located on a serving cell other than the serving cell in which the *TCI-State* is configured only if the *qcl-Type* is configured as *typeC* or *typeD.* See TS 38.214 [19] clause 5.1.5. if the TCI state is associated to a non-serving cell, this field is absent. |
| [...] |
| ***nsCellIndex*** |
| Non-serving cell in which the *referenceSignal* is configured. The index is associated to a non-serving cell configuration i.e. a ServingCellConfigCommon. |

In another solution, relying on the fact that the QCL information of a TCI state configuration can be associated to a non-serving cell (e.g. an intra-frequency neighbour) and that multiple TCI states could be associated to the same non-serving cell, for each non-serving cell reference/pointer, there can be a list of TCI states configuration(s), as follows:

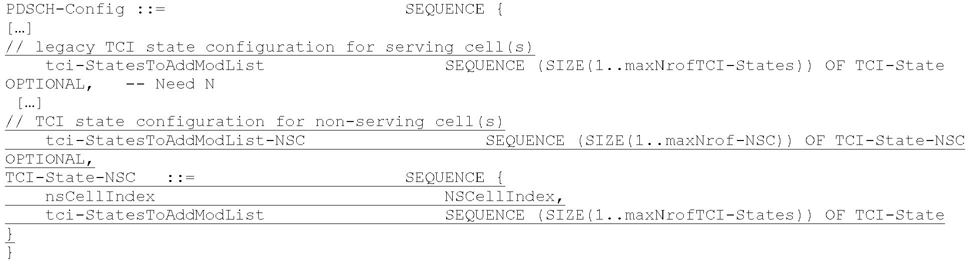

Hence, any TCI state configuration, e.g. as shown above, has as QCL source a reference signal associated to the non-serving cell associated to that index, e.g. nsCellIndex. Let's assume an example where 4 TCI states are associated to 2 non-serving cells, e.g. TCI=1 and TCI=2 with non-serving cell A whose non-serving cell index=7, and TCI=3 and TCI=4 with non-serving cell B, whose non-serving cell index=13. In this case, the PDSCH configuration (or any other IE containing TCI state configuration(s)) can contain within tci-StatesToAddModList-NSC the following:
- TCI-State-NSC(1), for non-serving cell A;
   ∘ nsCelllndex=7
   ∘ TCI=1 and TCI=2 with reference signals in QCL source associated to cell A, indexed by nsCelllndex=7;
- TCI-State-NSC(2), for non-serving cell B;
   ∘ nsCelllndex=13
   ∘ TCI=3 and TCI=4 with reference signals in QCL source associated to non-serving cell B, indexed by nsCelllndex=13;

In another solution, relying on the fact that the QCL information of a TCI state configuration can be associated to a non-serving cell (e.g. an inter-frequency neighbour) and that multiple TCI states could be associated to the same non-serving cell, for each non-serving cell reference/pointer, there can be a list of TCI states configuration(s), where the reference/pointer is the PCI and the ARFCN, as follows:

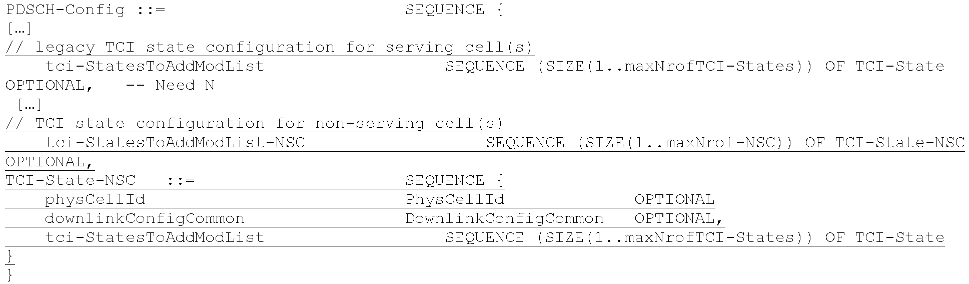

In another solution, the QCL information configuration of a TCI state configuration contains a reference/pointer to the cell the reference signal indicated is associated to, where the reference/pointer is the PCI and a reference to a measurement object configuration (such as measurement object identifier) for the non-serving cell, as follows:

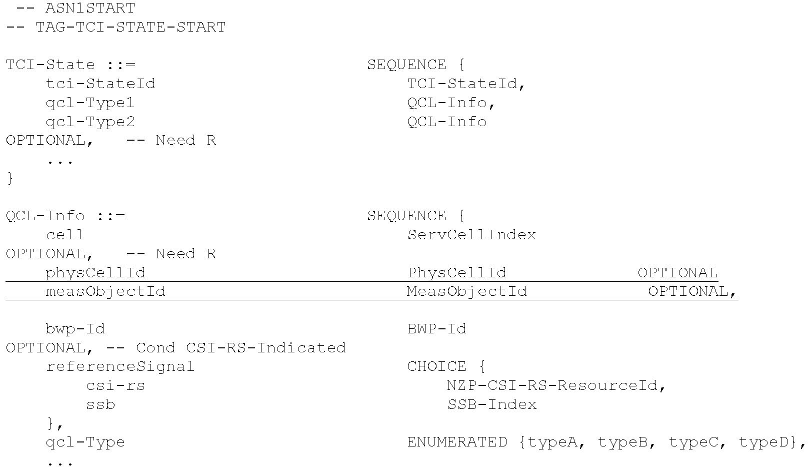

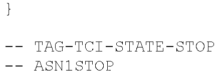

| ***QCL-Info* field descriptions** |
|---|
| ***physCellId*** |
| PCI of a non-serving cell in which the *referenceSignal* is configured. The field is absent if the *referenceSignal* is configured for a serving cell |
| ***measObjectId*** |
| Indicates the measurement object (as in MeasConfig) containing the SSB properties for that non-serving cell used as QCL source for that TCI state such as frequency information of a non-serving cell in which the *referenceSignal* is configured |

### Step 120: Determining one or more cell parameters based on a selection function

In this step, the UE sets/determines/obtains one or more cell parameters (to generate/obtain a UE identifier). For example, the UE identifier comprises the one or more cell parameters, selected according to a selection function, such as one of the configured PCI(s) for inter-cell mTRP operation and/or one of the configured C-RNTI(s) for inter-cell mTRP operation. The selection function can be based on one of the following.

### Solution a) Selection of the one or more cell parameters only from the initial PCell

In this case, the selection function is based on the UE selecting cell parameter(s) only from an initial PCell, such as selecting the PCI and/or the C-RNTI of the initial PCell. What is called the initial PCell may comprise at least one of the following characteristics:
- The initial PCell is the cell the UE relies on for common channels (e.g. Physical Broadcast Channel - PBCH), PDCCH CORESET zero); and/or
- The initial PCell is the cell for which the UE has a common serving cell configuration (e.g. ServingCellConfigCommon); and/or
- The initial PCell is the cell the UE performs the transition to Connected mode, e.g. before it operates according to the inter-cell mTRP feature; and/or
- The initial PCell is the cell the UE performs the random access during the transition to Connected mode and/or during a reconfiguration with sync and/or during a handover.

For example, the UE is configured for inter-cell mTRP for the serving frequency F0 of the initial PCell. The UE receives a CellGroupConfig for the MasterCellGroupConfig and, within ServingCellConfig for the initial PCell, the UE receives - as part of the PDSCH configuration - a list of configured TCI state configurations. For the initial PCell, the UE has a ServingCellConfigCommon from which it obtains the initial PCell PCI, and for the additional cells, the UE has their PCI(s) configured in each TCI state (as part of the QCL source configuration). If the UE selects a PCI from an additional cell (in frequency F0) in this example, the UE selects the PCI within a TCI state configuration, part of the QCL source configuration.

In one example, the UE selects cell parameter(s) only from an initial PCell, comprising the UE selecting a single PCI of the initial PCell. For example, the PCI corresponds to the PCI within the IE ServingCellConfigCommon of the PCell configuration, e.g. the field physCellId of IE PhysCellId, as defined in TS 38.331, and shown below:

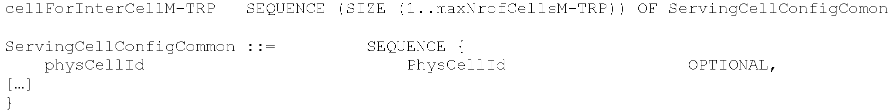

The IE ServingCellConfigCommon is used to configure cell specific parameters of a UE's serving cell and, in the case of inter-cell mTRP, it may contain some initial PCell parameters (cell-specific parameters). The IE contains parameters which a UE would typically acquire from SSB, MIB or SIBs when accessing the cell from IDLE.

In some examples, the UE selects cell parameter(s) only from an initial PCell, e.g. the UE selects the C-RNTI used in the initial PCell. The C-RNTI corresponds to, for example, the C-RNTI within the IE ReconfigurationWithSync and/or in the cell group of the initial PCell and/or the C-RNTI the UE has obtained during a random access procedure (e.g. within the Random Access Response) during a transition to connected state (RRC_INACTIVE to RRC_CONECTED transition or RRC_IDLE to RRC _CONNECTED transition), or via a MAC CE, while the UE was in RRC_CONNECTED.

At the network side, the last serving network node (e.g. last serving gNB), also assumes/determines that the UE is identified with the PCI of the initial PCell. Hence, it stores the UE Context associated with the PCI of the initial PCell. The last serving network node, can also assume/determine that the UE is identified with the C-RNTI the UE was using the last in the initial PCell. Hence, it stores the UE Context associated with the C-RNTI last used in the initial PCell.

In case of a resume procedure, the UE can store the selected cell parameters but the UE is not required to store the cell parameters for the additional PCells. For example, after selecting the cell parameter(s), the UE stores a UE context, such as the UE Inactive AS Context, which comprises the selected cell parameters.

In one example, when configured with mTRP, the UE is configured with a single PCell (i.e. the initial PCell) and additional cells/PCIs (referred as non-serving cells for inter-cell mTRP).

Furthermore, upon receiving a message to enter RRC _INACTIVE (e.g. RRCRelease with suspend configuration), the UE stores cell parameter(s) of the initial PCell for calculating the security token (Resume MAC-I) when attempting to resume the connection.

It should be noted that the UE can store cell parameters for multiple cells used for inter-cell mTRP, but the selection function refers to the initial PCell, which means that the cell parameters for the initial PCell are used for calculating the security token when the UE tries to resume the connection.

### Solution b) Selection of cell parameters from a cell configured for inter-cell mTRP explicitly indicated

In this case, the selection function is based on the UE selecting cell parameter(s), e.g. PCI and/or C-RNTI, from a cell configured for inter-cell mTRP, where the cell from which the parameter(s) is/are to be selected is explicitly indicated.

For example, the UE may select the PCI and/or C-RNTI of the indicated cell. The indicated cell can be a cell for which the cell configuration for inter-cell mTRP includes a parameter identifying that it is the cell whose PCI and/or used C-RNTI is to be used for setting the UE identity upon transmission of a Re-establishment request message. Alternatively, the UE can identify a cell based on its position in a list (e.g. parameter(s) selected from a cell in the first position in a list).

For example, the UE receives a list of cell configurations for inter-cell mTRP (e.g. each configuration encoded in the IE ServingCellConfigCommon(s)), where each IE (e.g. each ServingCellConfigCommon) contains a PCI. In addition, one of the IEs in the list, for one of the cells, contains an indication included in the ServingCellConfigCommon associated to the cell whose PCI (and/or C-RNTI) is/are to be used for UE identification during the re-establishment procedure. Upon re-establishment, the UE knows that the cell whose PCI is to be used for UE identification is the one from the cell whose indication is included. An example is shown below:

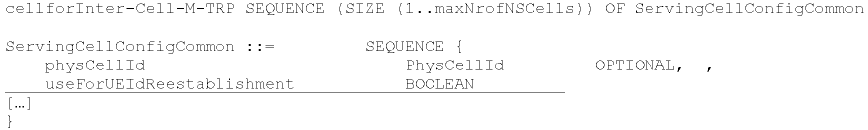

Alternatively, a new IE could be defined for configuring cells/PCI to be used for inter-cell mTRP, e.g. NSCellConfig (and these cells could possibly be referred to as non-serving cells or additional cells). In that case, the list of cell configuration defined in nsCellToAddModList contains one configuration including the indication. In addition, the PCI for that cell could be obtained from the nsCellConfigCommon. Below is an example of the non-serving cell configuration:

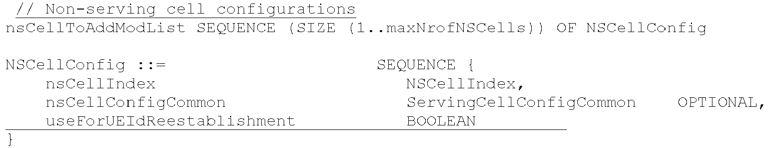

In the case an indication for that purpose is standardized, in one example, the absence of the indication in all cells configured for inter-cell mTRP indicates to the UE that the cell whose PCI (and /or C-RNTI) is to be used for UE identification during re-establishment is the PCI (and /or C-RNTI) of the initial PCell.

Furthermore, in one example, the cell explicitly indicated is the initial PCell or an additional PCell(s) configured for inter-cell mTRP.

In one example, the explicit indication is received with the message the UE receives to transition to RRC_INACTIVE, for example, the RRC Release message. In another example, the explicit indication is received with the inter-cell mTRP configurations.

In one example, upon receiving a message to enter RRC _INACTIVE (e.g. RRCRelease with suspend configuration), the UE stores cell parameter(s) of the explicitly indicated cell for calculating the security token (Resume MAC-I) to be used when attempting to resume the connection.

### Solution c) Selection of cell parameter(s) from multiple cells configured for inter-cell mTRP

In this case, the selection function is based on the UE selecting cell parameter(s) from multiple cells configured for inter-cell mTRP.

For example, the UE selecting cell parameter(s) from multiple cells configured for inter-cell mTRP may comprise selecting multiple PCIs to be used as UE identity in the RRC Reestablishment request message.

For example, the UE may select multiple C-RNTIs to be used as UE identity in the RRC Reestablishment request message.

In some examples, the UE selects multiple PCIs from cells used for inter-cell mTRP, where the cell configurations from which the UE selects the PCIs and/or C-RNTIs are explicitly indicated. For example, the indication shown below could be included for more than one cell:

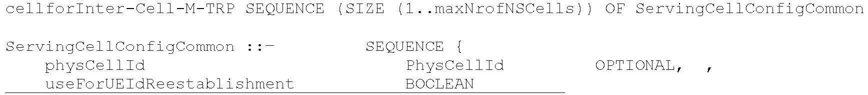

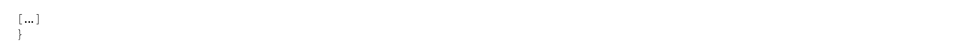

In some examples, the UE selects multiple PCIs (and/or multiple C-RNTI(s)) from cells used for inter-cell mTRP, where one of the cells is always the initial PCell, and at least one additional cell including an indication is selected.

In some examples, the UE selects multiple PCIs from cells used for inter-cell mTRP, where the cell configurations from which the UE selects the PCIs and/or C-RNTIs are based on their position in a list (e.g. the first cell in a list is the cell whose PCI and/or C-TRNI(s) are used for UE identification).

In one example, the cell for which cell parameter(s) is/are selected are all additional PCell(s) configured for inter-cell mTRP.

In one example, the explicit indications for the multiple cells are received with the message the UE receives to transition to RRC _INACTIVE (e.g. RRC release message).

In another example, the explicit indications are received with the inter-cell mTRP configurations.

In another example, the initial PCell is always selected, and the explicit indications refer to the additional PCells for which the UE selects and stores the cell parameter(s).

In some examples, upon receiving a message to enter RRC _INACTIVE (e.g. RRCRelease with suspend configuration) the UE stores cell parameter(s) of multiple cells for calculating the security token (Resume MAC-I) to be used when attempting to resume the connection. In this case, not only the selection function is a new aspect but the fact that parameters from multiple cells are used as input to calculate the security token (Resume MAC-I).

In another example, the selection function comprises the UE selecting the cell parameter(s), e.g. PCI and/or C-RNTI, from the cell the UE transitions to the power saving mode (e.g. RRC_INACTIVE). This is the cell the UE receives the RRC Release message including suspendConfig.

The selection function is configurable, i.e. the UE can be configured with an indication for which selection function is to be used. As such, the network node and the UE can have a common understanding of which cell parameters to use in the context of inter-cell mTRP.

Further examples of selections of cell parameters related to Option 3 (Approach 1) are provided below.

In one example, the selection of cell parameter(s), e.g. PCI and/or C-RNTI, only associated to the initial PCell is done. Note that the C-RNTI may be secondary here as likely the same C-RNTI is assumed. However, the initial PCI which is selected here as cell parameter is used in calculating the security token (resume MAC-I).

In another example, the selection of cell parameter(s), e.g. PCI and/or C-RNTI, is from the added beam information associated to the added PCI. That is, the added PCI is selected as the cell parameter to be used in calculating the security token (resume MAC-I).

### Solution d) selection based on beam information

In this case, the selection of cell parameter(s) is based on only cell parameters associated to the added beam information associated to the added PCI.

For example, the UE may select the cell parameter(s), e.g. PCI and/or C-RNTI, from the multiple cells whose RSs are configured/used as QCL sources of TCI states that are activated when the UE initiated the re-establishment procedure, e.g. upon RLF, or when the UE receives the message to transition to RRC_INACTIVE. In other words, if the UE is configured with TCI state 1 (QCL source = RS from cell A), TCI state 2 (QCL source = RS from cell B), TCI state 3 (QCL source = RS from cell C), and, when it initiates re-establishment (e.g. due to RLF), or when it receives the RRC Release message with suspend configuration, it has TCI state 1 and TCI state 2 activated, the UE selects the cell parameter(s) of cells A and B.

In some examples, the UE may select the cell parameter(s), e.g. PCI and/or C-RNTI, from the multiple cells whose RSs are configured/used as QCL sources of TCI states that are configured (not necessarily activated) when the UE initiated the re-establishment procedure or when the UE receives the message to transition to RRC_INACTIVE. In other words, if the UE is configured with TCI state 1 (QCL source = RS from cell A), TCI state 2 (QCL source = RS from cell B), TCI state 3 (QCL source = RS from cell C), when it initiates re-establishment or when it receives the RRC Release message with suspend configuration, the UE selects the cell parameter(s) of cells A, B and C.

In one example, the UE may select the cell parameters, e.g. PCI and/or C-RNTI, from the multiple cells whose RSs are configured/used as QCL sources of TCI states that are configured (not necessarily activated) and that are explicitly indicated. For example, if the UE is configured with TCI state 1 (QCL source = RS from cell A), TCI state 2 (QCL source = RS from cell B), TCI state 3 (QCL source = RS from cell C), when it initiates re-establishment or when it receives the RRC Release message with suspend configuration, the UE selects the cell parameter(s) of a subset of cells out of cells A, B and C, where the subset is explicitly indicated (e.g. the network indicates cells A and B).

In one example, the UE may select the cell parameter(s), e.g. PCI and/or C-RNTI, from the multiple cells whose RSs are configured/used as QCL sources of TCI states that are configured (not necessarily activated) and that the UE has used at least once for inter-cell mTRP. If the UE is configured with TCI state 1 (QCL source = RS from cell A), TCI state 2 (QCL source = RS from cell B), TCI state 3 (QCL source = RS from cell C), when it initiates a re-establishment procedure or when it receives the RRC Release message with suspend configuration, the UE selects the cell parameter(s) of a subset of cells out of cells A, B and C, where the subset is the set of cells the UE has used at least once from the time it has been configured/resumed (e.g. in the latest resume, connection setup or handover). For example, if the initial PCell is cell-A and after some time, before the UE initiates re-establishment or after some time before the UE was being suspended, only TCI states 1 and 2 were activated at some point in time (even though one of them may be deactivated when the UE leaves the cell), the UE may select the cell parameters of cells A and B.

### Solution e) selection based on last used cell/PCI

In this case, the selection of cell parameter(s) is based on only cell parameters associated to PCI which was last used for the UE for scheduling PDCCH. The term "used for scheduling PDCCH" means that the CORESET used for DL assignment had TCI state associated to the *PCI.*

In one example, the UE may select the cell parameter(s), e.g. PCI and/or C-RNTI, from the cell the UE was connected to when the UE initiates re-establishment, e.g. the cell where RLF has been detected, and/or the cell where the UE receives a message that fails to be verified (and/or leads to a reconfiguration failure) and/or that leads to an integrity failure.

### Solution f) selection based on not failed cell

In this case, the selection of cell parameter(s) is based on cell parameters only associated to PCI which did not encounter beam failure detection, in case beam failure detection occurred before the suspend command.

The selection of cell parameter(s) can be performed by multiple functions, such as the ones described in the disclosure and the UE receives an indication from the network of which of the functions is to be used upon re-establishment.

### Step 130: Transmitting the Reestablishment/Resume Request message

In this step, the UE transmits the Re-establishment request (which can be a resume request) message to the network. The Re-establishment request message can be a RRC Re-establishment request message or a RRCResume request message. Also, the re-establishment request message comprises the one or more cell parameters for UE identity, selected as described in step 120.

For example, after having set/obtaining the UE identity (UE ID) in the RRC Re-establishment request message according to at least one of the methods/embodiments described, the UE submits the message to the lower layers for transmissions.

Below, different ways to set the UE ID based on the different selection functions are described.

### 1) UE ID set based on multiple PCIs and/or C-RNTIs (related to solution b))

A sub-problem derived from solution b) is that the current design of the RRCReestablishmentRequest message in NR (and in LTE) has a fixed number of bits for setting the UE identity (Number_of_bits_PCI and Number_of_bits_C-RNTI). For example, for NR PCI, the number of bits can encode 1008 values.

To resolve this problem, the following is proposed:
- New message fitting multiple PCI(s)/ C-RNTI(s);
- Mapping function to map multiple PCI(s)/ C-RNTI(s) to a fixed number of bits fitting the message.

These two proposals are described now.

### i. New message (new Re-establishment Request message)

In this case, a new RRC Re-establishment message is proposed/provided. This re-establishment request message includes more than one PCI for the UE Identity. This new RRC Re-establishment message can also include more than one C-RNTIs for the UE Identity.

The new message requires that UEs selecting multiple PCIs and/or C-RNTIs for the UE identity would use a new logical channel defined for that purpose so that the network can identify that this a new Re-establishment message containing multiple C-RNTI(s) and/or PCI(s).

In some examples, the UE determines to use multiple PCI(s) and/or multiple C-RNTI for UE identification in a Re-establishment request message and selects a first logical channel associated to a message that fits multiple PCI(s) and/or multiple C-RNTI(s). If the UE determines to use a single PCI and a single C-RNTI for UE identification, the UE selects a second logical channel associated to a message that fits a single PCI and a single C-RNTI.

### ii. Mapping function

In one example, a mapping function is defined, where the input to the function is a set of PCI(s) and the output is a fixed number of bits (e.g. number of bits of a single PCI).

In another example, a mapping function is defined, where the input to the function is a set of C-RNTI(s) and the output is a fixed number of bits (e.g. number of bits of a single C-RNTI).

The mapping function may perform any function that converts a first number of bits into a second number of bits, where the second number of bits is smaller than the first number of bits. The mapping can be any of the following: truncation and/or merging and/or selection of X bits from one parameter and Y from another, etc.

Furthermore, as an example, method 100 can be applied to the case of a re-establishment. In this case, Fig. 4 illustrates a method 200 for res-establishing a connection in the context of mTRP. Method 200 may comprise:
Step 210: Receiving inter-cell multi TRP (mTRP) configuration(s), wherein each configuration comprises one or more cell parameters.
Step 220: determining one or more cell parameters from the received one or more inter-cell mTRP configurations, by using a selection function.
Step 230 (optional): upon triggering a re-establishment procedure, setting (obtaining) a UE identifier in a RRC Re-establishment request message, wherein the UE identifier comprises the selected one or more cell parameters.
Step 240: Transmitting the RRC Re-establishment request message to a network node, the request message including the UE identifier.

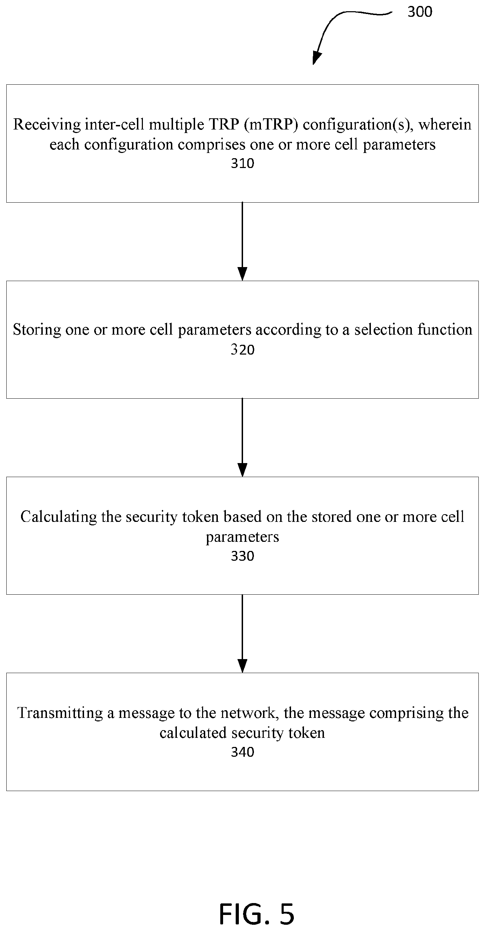

As another example, method 100 can be also applied to the case of a resume procedure in the context of mTRP. In this case, Fig. 5 illustrates a method 300 for resuming a connection, by a wireless device/UE, which also determines a security token for resuming the connection, from a power saving mode to a connected mode, for example. Method 300 may comprise:
Step 310: Receiving one or more inter-cell multiple TRP (mTRP) configuration(s), wherein each configuration comprises one or more cell parameters.
Step 320: Determining/storing one or more cell parameters according to a selection function. For example, the determining/storing operation may be performed upon entering the power saving mode. Furthermore, the selection function may select one or more cell parameters from the inter-cell mTRP configurations.
Step 330: Calculating the security token based on the stored one or more cell parameters (or based on one or more cell parameters selected by the selection function). For example, the security token is calculated when the wireless device initiates resuming from the power saving mode to the connected mode.
Step 340: Transmitting a message to the network, the message comprising the calculated security token. For example, the message can be a Resume Request.

As a note, the security token can be considered as a UE identifier since it is used to identify the UE for resuming the connection and it is based on the selected one or more cell parameters.

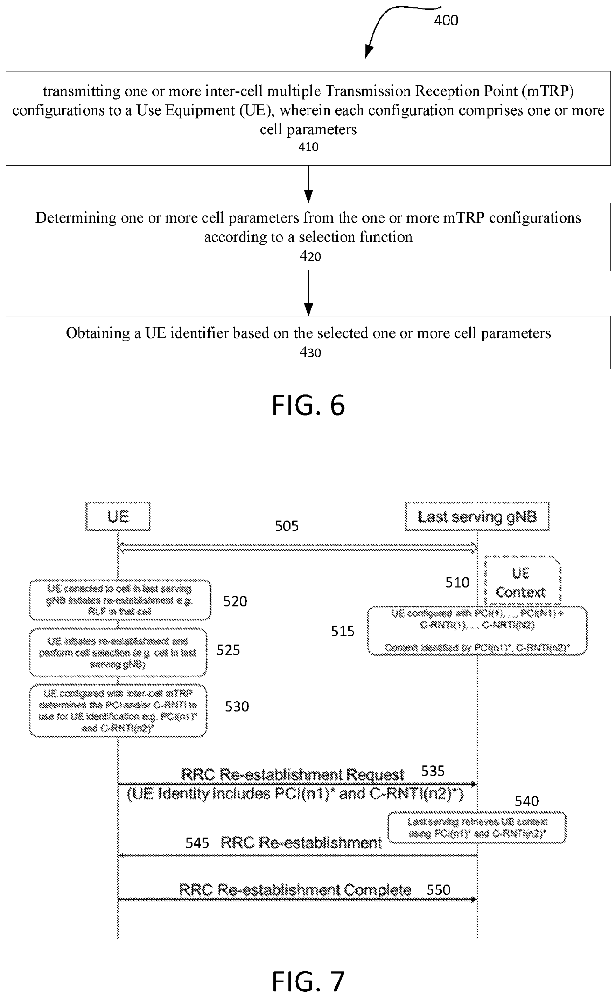

Turning now to FIG. 6, a method 400 in a network node, for re-establishing/resuming a connection between a UE and the network node, in the context of inter-cell mTRP will be described. Method 400 may comprise:
Step 410: Transmitting one or more inter-cell mTRP configurations to a UE, wherein each configuration comprises one or more cell parameters.
Step 420: Determining one or more cell parameters from the one or more mTRP configurations according to a selection function.
Step 430: Determining/setting/obtaining a UE identifier based on the selected one or more cell parameters

When method 400 is applied in particular to the re-establishment procedure, method 400 may further comprise:
- Receiving a Re-establishment Request message from the UE, the re-establishment request message comprising the UE identifier, which is based on the one or more cell parameters selected according to the selection function; - Retrieving the UE context based on the UE identifier.
- Transmitting in response to the Re-establishment request message a Re-establishment message.
- Optionally, receiving a Re-establishment Request Complete and transmitting a first Reconfiguration message.

In some examples, the network node where the UE context is located is the last serving network node, where the UE was connected before the UE initiates re-establishment and is one of the following: 1) The same node the UE tries to re-establish; or 2) A different network node, compared to where the UE tries to re-establish, where this different network node is prepared with the UE context (e.g. received in a handover preparation procedure from the last serving network node) associated to the UE identity; or 3) A different network node, compared to where the UE tries to re-establish, where this different network node is not prepared with the UE context and upon receiving the re-establishment request trigger, a UE retrieve context request is sent to the last serving network node, the UE retrieve context request including the UE identity included in the Reestablishment Request message.

### 1) Same node case

In this case, the step of retrieving the UE context based on the UE identifier comprises obtaining the UE context from the internal memory, upon identifying that the received UE identity (e.g., PCI(s) and C-RNTI(s)) in the Re-establishment Request matches a UE identity in the memory for a stored UE context.

In one example, the UE re-establishes in the last serving gNB, where the first network node where the UE is trying to re-establish (i.e. which received the Re-establishment Request message) is the last serving network node the UE was connected to when the re-establishment procedure was triggered.

FIG. 7 illustrates the method for the case of same node, where the UE re-establishes with the last serving gNB, for example.

For example, at first, the UE is connected to a network node (also referred to as the last serving gNB), in step 505. As such, the network node has the UE context, stored in its memory for example, in step 510. The UE context may comprise the one or more mTRP configurations, including multiple PCIs and C-RNTIs. The last serving gNB selects PCI(n1)* and C-RNTI(n2)*, for example, to identify the UE context, in step 515. At some point, the connection is disconnected/suspended, due to RLF, for example.

In step 520, the UE initiates a re-establishment procedure and performs a cell selection in step 525, by selecting a cell in the last serving gNB, for example.

In step 530, the UE, which is configured with the one or more inter-cell mTRP configurations determines a PCI and/or C-RNTI to use as UE identifier, such as PCI(n1)* and C-RNTI(n2)*.

In step 535, the UE sends a re-establishment request which comprises the UE identifier, to the last serving gNB.

In step 540, the last serving cell retrieves the UE context, using the received UE identifier.

In step 545, the last serving node sends a RRC Re-establishment message to the UE.

In step 550, the UE sends a RRC Re-establishment Complete message, once the UE is connected.

### 2) Handover preparation

In this case, the UE re-establishes in a different network node than the last serving gNB, but a prepared network node. The target network node where the UE is trying to re-establish has received the UE context from a source network node in a mobility/ handover procedure in a Handover Request message. The Handover Request message includes the UE identity associated to the UE context. That can be included in an inter-node RRC message Handover Preparation, as part of information the source network node sends to the target network node, preparing it for the case the handover fails and the UE initiates a re-establishment procedure.

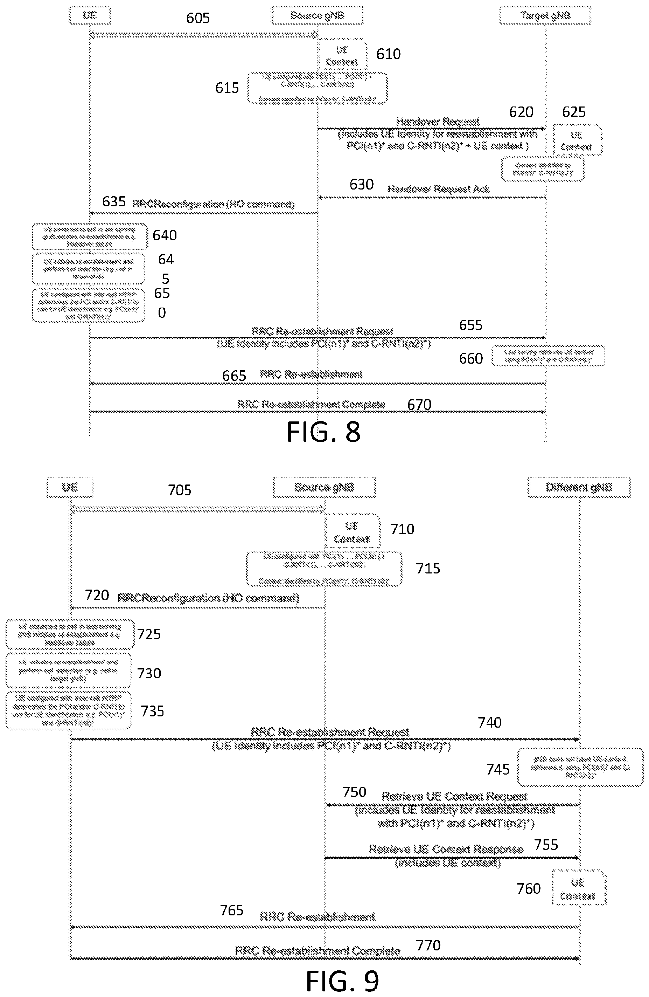

FIG. 8 illustrates such a scenario, where the UE is handed over from a source gNB to a target gNB, which is prepared.

The UE is first connected to the source gNB. Steps 605 to 615 are the same as steps 505 to 515 of Fig. 7.

The source gNB prepares the target gNB for handover. To do so, the source gNB sends a handover request to the target gNB in step 620. The handover (HO) request comprises the UE identity for re-establishment, such as PCI(n1)* and C-RNTI(n2)* and the UE context. Upon receipt of the handover request, the target gNB stores the UE context as identified by the UE identity, in step 625. Then in step 630, the target gNB sends a handover request acknowledgement to the source gNB, which then sends a RRC Reconfiguration message to the UE (step 635), the message comprising the HO command.

The rest of the steps (640 to 670) are similar to steps 520 to 550 of Fig. 7, with the target NB being the last serving node.

### 3) Different nodes

In this case, the UE re-establishes in a network node different than the last serving gNB, and which is not a prepared network node. As such, when the network node retrieves the UE context based on the UE identifier, it obtains the UE context by requesting it from the last serving network node, where the UE context is located.

For example, retrieving the UE context may comprise transmitting a UE context retrieve request message to the last serving network node, the UE context retrieve request message comprising the UE identity.

For example, retrieving the UE context may comprise determining the last serving network node based on the UE identity transmitted by the UE in the Re-establishment Request message.

For example, retrieving the UE context may comprise determining the last serving network node by determining that the PCI in the UE identity transmitted by the UE in the Re-establishment Request message is associated to a network node in a neighbour relation table.

FIG. 9 illustrates such a scenario, where the target gNB is a node different from the source gNB, and which is not prepared.

Since the target gNB (referred to as 'different gNB') in this case is not a prepared node, compared to Fig. 8, the source gNB does not do a handover request with the target gNB.

Steps 705 to 740 are the same as steps 605 to 615 and 635 to 655 of Fig. 8.

In step 745, since the target gNB does not have the UE context, it needs to retrieve it using the received UE identifier (e.g. PCI(n1)* and C-RNTI (n2)*. To do so, it sends a retrieve UE context request to the source gNB in step 750. The request comprises the UE identifier.

In step 755, the source gNB retrieves the UE context based on the received UE identifier and sends it to the target gNB in a Retrieve UE context response.

In step 760, the target gNB has the UE context and sends a RRC Re-establishment message to the UE in step 765. Once connected, the UE sends a RRC Re-establishment complete message to the target gNB in step 770.

In some examples, the second network node sends a Handover Request message to a first network node, wherein the Handover Request message comprises the UE identity/identifier and the associated UE context.

In some examples, the second network node receives a UE context retrieve request message from a first network node, wherein the UE context retrieve request message comprises the UE identity.

In some examples, the second network node responds to the UE context retrieve request message from a first network node with a UE context retrieve message including the UE context associated to the UE identity.

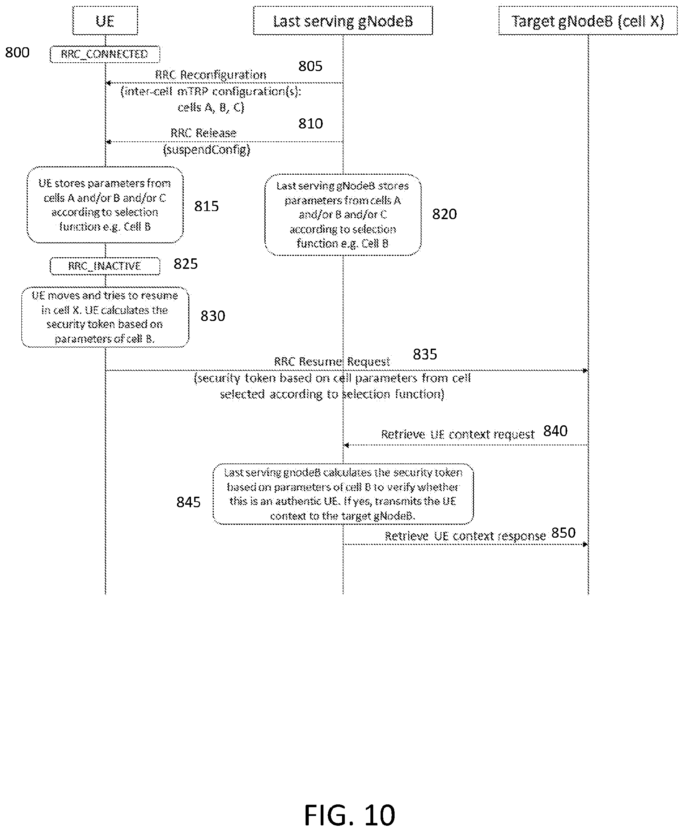

Fig. 10 illustrates a signaling diagram for the suspend and resume procedures between the UE, the last serving gNB and the target gNB, for example, in the context of inter-cell mTRP.

In step 800, the UE is in the RRC_connected mode, i.e. the UE is connected with a gNB (such as the last serving gNB).

In step 805, the gNB (e.g. last serving gNB) sends a RRC configuration to the UE. For example, the configuration can comprise an inter-cell mTRP configuration associated with several cells, such as cell A, cell B and cell C.

In step 810, due to some reasons, the gNB (e.g. last serving gNB) suspends the connection with the UE. To do so, the gNB sends a RRC release message to the UE, the release message comprising a suspendConfig. As such, the gNB now becomes the last serving gNB.

In step 815, upon receipt of the release message, the UE determines and stores one or more parameters related to cell A and/or cell B and/or cell C, according to a selection function, which is also used by the gNB (last serving gNB). As an example, the selection function can be such that the UE selects to store parameters related to cell B. In step 820, on the network side, the last serving gNB determines and stores one or more parameters related to cell A and/or cell B and/or cell C, according to the same selection function. For example, the gNB selects to store parameters related to cell B.

In step 825, the UE enters the power saving mode, i.e. RRC_Inactive.

In step 830, the UE moves and tries to resume the connection in another cell, for example cell X (associated with target gNB). To do so, the UE calculates a security token, based on the stored parameters, e.g. parameters of cell B. The calculated security token can be used as an UE identity.

In step 835, the UE sends a RRC resume request to the target gNB. The resume request may comprise the UE identity (i.e. security token), calculated based on the stored parameters selected according to the selection function (in one example, based on the parameters of cell B).

In step 840, upon receipt of the RRC resume request, the target gNB sends a retrieve UE context request to the last serving gNB. The request may comprise the security token calculated by the UE.

In step 845, the last gNB calculates the security token, based on the stored parameters, selected according to the selection function (e.g. parameters of cell B), to verify whether the UE is an authentic/authorized UE. If the calculated security token by the last gNB matches the security token calculated by the UE, the last gNB transmits the UE context to the target gNB.

In step 850, the last gNB sends a Retrieve UE context response to the target gNB, in response to the request in step 840, confirming that the UE is authentic.

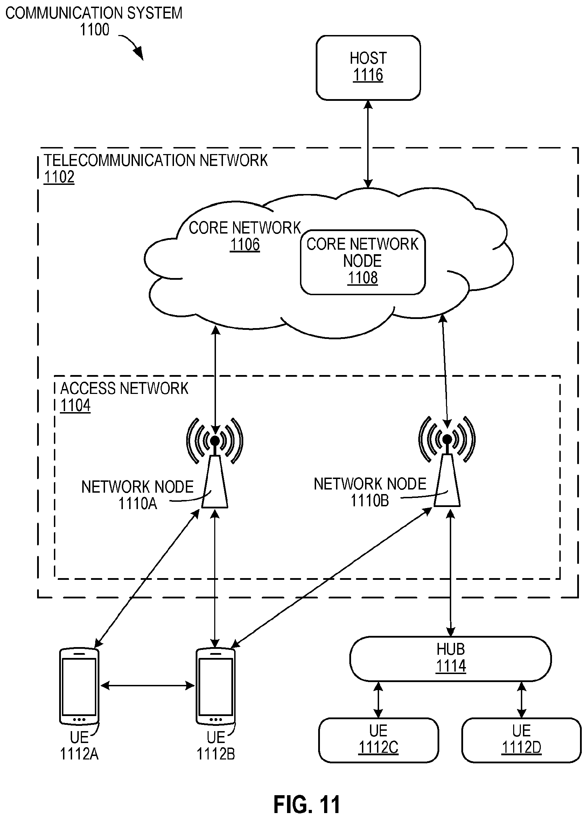

Fig. 11 shows an example of a communication system 1100 in accordance with some embodiments.

In the example, the communication system 1100 includes a telecommunication network 1102 that includes an access network 1104, such as a radio access network (RAN), and a core network 1106, which includes one or more core network nodes 1108. The access network 1104 includes one or more access network nodes, such as network nodes 1110a and 1110b (one or more of which may be generally referred to as network nodes 1110), or any other similar 3GPP access node or non-3GPP access point. The network nodes 1110 facilitate direct or indirect connection of user equipment (UE), such as by connecting UEs 1112a, 1112b, 1112c, and 1112d (one or more of which may be generally referred to as UEs 1112) to the core network 1106 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 1100 may include any number of wired or wireless networks, network nodes, UEs, and/or any other components or systems that may facilitate or participate in the communication of data and/or signals whether via wired or wireless connections. The communication system 1100 may include and/or interface with any type of communication, telecommunication, data, cellular, radio network, and/or other similar type of system.

The UEs 1112 may be any of a wide variety of communication devices, including wireless devices arranged, configured, and/or operable to communicate wirelessly with the network nodes 1110 and other communication devices. Similarly, the network nodes 1110 are arranged, capable, configured, and/or operable to communicate directly or indirectly with the UEs 1112 and/or with other network nodes or equipment in the telecommunication network 1102 to enable and/or provide network access, such as wireless network access, and/or to perform other functions, such as administration in the telecommunication network 1102.

In the depicted example, the core network 1106 connects the network nodes 1110 to one or more hosts, such as host 1116. These connections may be direct or indirect via one or more intermediary networks or devices. In other examples, network nodes may be directly coupled to hosts. The core network 1106 includes one more core network nodes (e.g., core network node 1108) that are structured with hardware and software components. Features of these components may be substantially similar to those described with respect to the UEs, network nodes, and/or hosts, such that the descriptions thereof are generally applicable to the corresponding components of the core network node 1108. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 1116 may be under the ownership or control of a service provider other than an operator or provider of the access network 1104 and/or the telecommunication network 1102 and may be operated by the service provider or on behalf of the service provider. The host 1116 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 1100 of Fig. 11 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long LTE, and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 1102 is a cellular network that implements 3GPP standardized features. Accordingly, the telecommunications network 1102 may support network slicing to provide different logical networks to different devices that are connected to the telecommunication network 1102. For example, the telecommunications network 1102 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 1112 are configured to transmit and/or receive information without direct human interaction. For instance, a UE may be designed to transmit information to the access network 1104 on a predetermined schedule, when triggered by an internal or external event, or in response to requests from the access network 1104. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 1114 communicates with the access network 1104 to facilitate indirect communication between one or more UEs (e.g., UE 1112c and/or 1112d) and network nodes (e.g., network node 1110b). In some examples, the hub 1114 may be a controller, router, content source and analytics, or any of the other communication devices described herein regarding UEs. For example, the hub 1114 may be a broadband router enabling access to the core network 1106 for the UEs. As another example, the hub 1114 may be a controller that sends commands or instructions to one or more actuators in the UEs. Commands or instructions may be received from the UEs, network nodes 1110, or by executable code, script, process, or other instructions in the hub 1114. As another example, the hub 1114 may be a data collector that acts as temporary storage for UE data and, in some embodiments, may perform analysis or other processing of the data. As another example, the hub 1114 may be a content source. For example, for a UE that is a VR headset, display, loudspeaker or other media delivery device, the hub 1114 may retrieve VR assets, video, audio, or other media or data related to sensory information via a network node, which the hub 1114 then provides to the UE either directly, after performing local processing, and/or after adding additional local content. In still another example, the hub 1114 acts as a proxy server or orchestrator for the UEs, in particular in if one or more of the UEs are low energy IoT devices.

The hub 1114 may have a constant/persistent or intermittent connection to the network node 1110b. The hub 1114 may also allow for a different communication scheme and/or schedule between the hub 1114 and UEs (e.g., UE 1112c and/or 1112d), and between the hub 1114 and the core network 1106. In other examples, the hub 1114 is connected to the core network 1106 and/or one or more UEs via a wired connection. Moreover, the hub 1114 may be configured to connect to an M2M service provider over the access network 1104 and/or to another UE over a direct connection. In some scenarios, UEs may establish a wireless connection with the network nodes 1110 while still connected via the hub 1114 via a wired or wireless connection. In some embodiments, the hub 1114 may be a dedicated hub - that is, a hub whose primary function is to route communications to/from the UEs from/to the network node 1110b. In other embodiments, the hub 1114 may be a non-dedicated hub - that is, a device which is capable of operating to route communications between the UEs and network node 1110b, but which is additionally capable of operating as a communication start and/or end point for certain data channels.

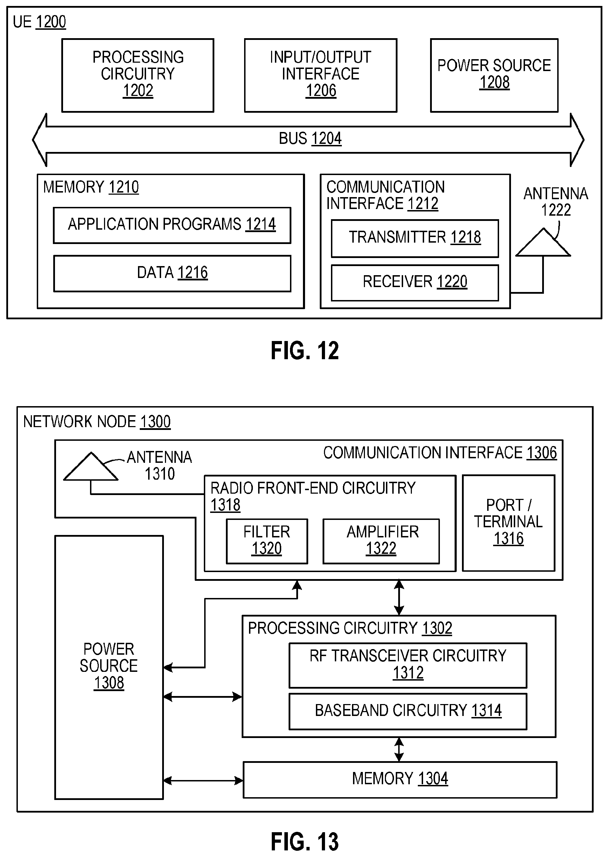

Fig. 12 shows a UE 1200 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, a narrow band internet of things (NB-IoT) UE, a machine type communication (MTC) UE, and/or an enhanced MTC (eMTC) UE, etc.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 1200 includes processing circuitry 1202 that is operatively coupled via a bus 1204 to an input/output interface 1206, a power source 1208, a memory 1210, a communication interface 1212, and/or any other component, or any combination thereof. Certain UEs may utilize all or a subset of the components shown in Fig. 12. The level of integration between the components may vary from one UE to another UE. Further, certain UEs may contain multiple instances of a component, such as multiple processors, memories, transceivers, transmitters, receivers, etc.

The processing circuitry 1202 is configured to process instructions and data and may be configured to implement any sequential state machine operative to execute instructions stored as machine-readable computer programs in the memory 1210. The processing circuitry 1202 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1202 may include multiple central processing units (CPUs). The process circuitry 1202 is configured to perform any steps of method 100 of Fig. 2, or Fig. 4 or Fig. 5.

In the example, the input/output interface 1206 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 1200. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, etc., or any combination thereof. An output device may use the same type of interface port as an input device. For example, a Universal Serial Bus (USB) port may be used to provide an input device and an output device.

In some embodiments, the power source 1208 is structured as a battery or battery pack. Other types of power sources, such as an external power source (e.g., an electricity outlet), photovoltaic device, or power cell, may be used. The power source 1208 may further include power circuitry for delivering power from the power source 1208 itself, and/or an external power source, to the various parts of the UE 1200 via input circuitry or an interface such as an electrical power cable. Delivering power may be, for example, for charging of the power source 1208. Power circuitry may perform any formatting, converting, or other modification to the power from the power source 1208 to make the power suitable for the respective components of the UE 1200 to which power is supplied.

The memory 1210 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1210 includes one or more application programs 1214, such as an operating system, web browser application, a widget, gadget engine, or other application, and corresponding data 1216. The memory 1210 may store, for use by the UE 1200, any of a variety of various operating systems or combinations of operating systems.

The memory 1210 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1210 may allow the UE 1200 to access instructions, application programs and the like, stored on transitory or non-transitory memory media, to off-load data, or to upload data. An article of manufacture, such as one utilizing a communication system may be tangibly embodied as or in the memory 1210, which may be or comprise a device-readable storage medium.

The processing circuitry 1202 may be configured to communicate with an access network or other network using the communication interface 1212. The communication interface 1212 may comprise one or more communication subsystems and may include or be communicatively coupled to an antenna 1222. The communication interface 1212 may include one or more transceivers used to communicate, such as by communicating with one or more remote transceivers of another device capable of wireless communication (e.g., another UE or a network node in an access network). Each transceiver may include a transmitter 1218 and/or a receiver 1220 appropriate to provide network communications (e.g., optical, electrical, frequency allocations, and so forth). Moreover, the transmitter 1218 and receiver 1220 may be coupled to one or more antennas (e.g., antenna 1222) and may share circuit components, software or firmware, or alternatively be implemented separately. Furthermore, the processing circuitry 1202 is configured to perform any of the steps of method 100 of FIG. 2.

In the illustrated embodiment, communication functions of the communication interface 1212 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards.

Regardless of the type of sensor, a UE may provide an output of data captured by its sensors, through its communication interface 1212, via a wireless connection to a network node. Data captured by sensors of a UE can be communicated through a wireless connection to a network node via another UE.

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an IoT device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, an Unmanned Aerial Vehicle (UAV), and any kind of medical device, e.g. a remote controlled surgical robot, etc. A UE in the form of an IoT device comprises circuitry and/or software in dependence of the intended application of the IoT device in addition to other components as described in relation to the UE 1200 shown in Fig. 12.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one example, the UE may implement the 3GPP NB-IoT standard. In other scenarios, a UE may represent a vehicle, such as a car, truck, ship or airplane, or other equipment that is capable of monitoring and/or reporting on its operational status/other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Fig. 13 shows a network node 1300 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include m-TRP 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 1300 includes a processing circuitry 1302, a memory 1304, a communication interface 1306, and a power source 1308. The network node 1300 may be composed of multiple physically separate components (e.g., a NB component and a RNC component, or a BTS component and a BSC component, etc.), which may each have their own respective components. In certain scenarios in which the network node 1300 comprises multiple separate components (e.g., BTS and BSC components), one or more of the separate components may be shared among several network nodes. For example, a single RNC may control multiple NBs. In such a scenario, each unique NB and RNC pair, may in some instances be considered a single separate network node. In some embodiments, the network node 1300 may be configured to support multiple radio access technologies (RATs). In such embodiments, some components may be duplicated (e.g., separate memory 1304 for different RATs) and some components may be reused (e.g., a same antenna 1310 may be shared by different RATs). The network node 1300 may also include multiple sets of the various illustrated components for different wireless technologies integrated into network node 1300, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1300.

The processing circuitry 1302 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1300 components, such as the memory 1304, to provide network node 1300 functionality.

In some embodiments, the processing circuitry 1302 includes a system on a chip (SOC). In some embodiments, the processing circuitry 1302 includes one or more of radio frequency (RF) transceiver circuitry 1312 and baseband processing circuitry 1314. In some embodiments, the radio frequency (RF) transceiver circuitry 1312 and the baseband processing circuitry 1314 may be on separate chips (or sets of chips), boards, or units, such as radio units and digital units. In alternative embodiments, part or all of RF transceiver circuitry 1312 and baseband processing circuitry 1314 may be on the same chip or set of chips, boards, or units. Furthermore, the processing circuitry 1302 is configured to perform any of the steps of method 400 of FIG. 6.

The memory 1304 may comprise any form of volatile or non-volatile computer-readable memory including, without limitation, persistent storage, solid-state memory, remotely mounted memory, magnetic media, optical media, RAM, ROM, mass storage media (for example, a hard disk), removable storage media (for example, a flash drive, a CD or a DVD, and/or any other volatile or non-volatile, non-transitory device-readable and/or computer-executable memory devices that store information, data, and/or instructions that may be used by the processing circuitry 1302. The memory 1304 may store any suitable instructions, data, or information, including a computer program, software, an application including one or more of logic, rules, code, tables, and/or other instructions capable of being executed by the processing circuitry 1302 and utilized by the network node 1300. The memory 1304 may be used to store any calculations made by the processing circuitry 1302 and/or any data received via the communication interface 1306. In some embodiments, the processing circuitry 1302 and memory 1304 is integrated.

The communication interface 1306 is used in wired or wireless communication of signaling and/or data between a network node, access network, and/or UE. As illustrated, the communication interface 1306 comprises port(s)/terminal(s) 1316 to send and receive data, for example to and from a network over a wired connection. The communication interface 1306 also includes radio front-end circuitry 1318 that may be coupled to, or in certain embodiments a part of, the antenna 1310. Radio front-end circuitry 1318 comprises filters 1320 and amplifiers 1322. The radio front-end circuitry 1318 may be connected to an antenna 1310 and processing circuitry 1302. The radio front-end circuitry may be configured to condition signals communicated between antenna 1310 and processing circuitry 1302. The radio front-end circuitry 1318 may receive digital data that is to be sent out to other network nodes or UEs via a wireless connection. The radio front-end circuitry 1318 may convert the digital data into a radio signal having the appropriate channel and bandwidth parameters using a combination of filters 1320 and/or amplifiers 1322. The radio signal may then be transmitted via the antenna 1310. Similarly, when receiving data, the antenna 1310 may collect radio signals which are then converted into digital data by the radio front-end circuitry 1318. The digital data may be passed to the processing circuitry 1302. In other embodiments, the communication interface may comprise different components and/or different combinations of components.

In certain alternative embodiments, the network node 1300 does not include separate radio front-end circuitry 1318, instead, the processing circuitry 1302 includes radio front-end circuitry and is connected to the antenna 1310. Similarly, in some embodiments, all or some of the RF transceiver circuitry 1312 is part of the communication interface 1306. In still other embodiments, the communication interface 1306 includes one or more ports or terminals 1316, the radio front-end circuitry 1318, and the RF transceiver circuitry 1312, as part of a radio unit (not shown), and the communication interface 1306 communicates with the baseband processing circuitry 1314, which is part of a digital unit (not shown).

The antenna 1310 may include one or more antennas, or antenna arrays, configured to send and/or receive wireless signals. The antenna 1310 may be coupled to the radio front-end circuitry 1318 and may be any type of antenna capable of transmitting and receiving data and/or signals wirelessly. In certain embodiments, the antenna 1310 is separate from the network node 1300 and connectable to the network node 1300 through an interface or port.

The antenna 1310, communication interface 1306, and/or the processing circuitry 1302 may be configured to perform any receiving operations and/or certain obtaining operations described herein as being performed by the network node. Any information, data and/or signals may be received from a UE, another network node and/or any other network equipment. Similarly, the antenna 1310, the communication interface 1306, and/or the processing circuitry 1302 may be configured to perform any transmitting operations described herein as being performed by the network node. Any information, data and/or signals may be transmitted to a UE, another network node and/or any other network equipment.

The power source 1308 provides power to the various components of network node 1300 in a form suitable for the respective components (e.g., at a voltage and current level needed for each respective component). The power source 1308 may further comprise, or be coupled to, power management circuitry to supply the components of the network node 1300 with power for performing the functionality described herein. For example, the network node 1300 may be connectable to an external power source (e.g., the power grid, an electricity outlet) via an input circuitry or interface such as an electrical cable, whereby the external power source supplies power to power circuitry of the power source 1308. As a further example, the power source 1308 may comprise a source of power in the form of a battery or battery pack which is connected to, or integrated in, power circuitry. The battery may provide backup power should the external power source fail.

Embodiments of the network node 1300 may include additional components beyond those shown in Fig. 13 for providing certain aspects of the network node's functionality, including any of the functionality described herein and/or any functionality necessary to support the subject matter described herein. For example, the network node 1300 may include user interface equipment to allow input of information into the network node 1300 and to allow output of information from the network node 1300. This may allow a user to perform diagnostic, maintenance, repair, and other administrative functions for the network node 1300.

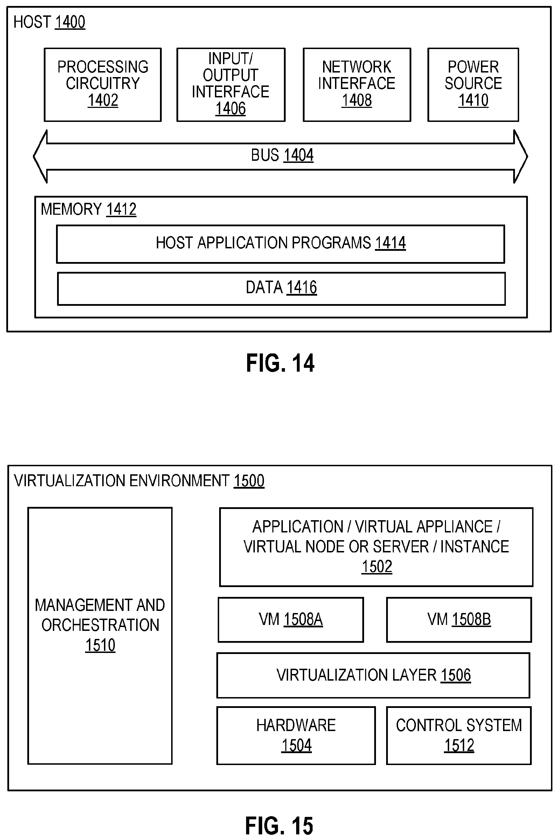

Fig. 14 is a block diagram of a host 1400, which may be an embodiment of the host 1116 of Fig. 11, in accordance with various aspects described herein. As used herein, the host 1400 may be or comprise various combinations hardware and/or software, including a standalone server, a blade server, a cloud-implemented server, a distributed server, a virtual machine, container, or processing resources in a server farm. The host 1400 may provide one or more services to one or more UEs.

The host 1400 includes processing circuitry 1402 that is operatively coupled via a bus 1404 to an input/output interface 1406, a network interface 1408, a power source 1410, and a memory 1412. Other components may be included in other embodiments. Features of these components may be substantially similar to those described with respect to the devices of previous figures, such as Figs. 12 and 13, such that the descriptions thereof are generally applicable to the corresponding components of host 1400.

The memory 1412 may include one or more computer programs including one or more host application programs 1414 and data 1416, which may include user data, e.g., data generated by a UE for the host 1400 or data generated by the host 1400 for a UE. Embodiments of the host 1400 may utilize only a subset or all of the components shown. The host application programs 1414 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 1414 may also provide for user authentication and licensing checks and may periodically report health, routes, and content availability to a central node, such as a device in or on the edge of a core network. Accordingly, the host 1400 may select and/or indicate a different host for over-the-top services for a UE. The host application programs 1414 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Fig. 15 is a block diagram illustrating a virtualization environment 1500 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1500 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1502 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 1504 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1506 (also referred to as hypervisors or virtual machine monitors (VMMs)), provide VMs 1508a and 1508b (one or more of which may be generally referred to as VMs 1508), and/or perform any of the functions, features and/or benefits described in relation with some embodiments described herein. The virtualization layer 1506 may present a virtual operating platform that appears like networking hardware to the VMs 1508.

The VMs 1508 comprise virtual processing, virtual memory, virtual networking or interface and virtual storage, and may be run by a corresponding virtualization layer 1506. Different embodiments of the instance of a virtual appliance 1502 may be implemented on one or more of VMs 1508, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1508 may be a software implementation of a physical machine that runs programs as if they were executing on a physical, non-virtualized machine. Each of the VMs 1508, and that part of hardware 1504 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1508 on top of the hardware 1504 and corresponds to the application 1502.

Hardware 1504 may be implemented in a standalone network node with generic or specific components. Hardware 1504 may implement some functions via virtualization. Alternatively, hardware 1504 may be part of a larger cluster of hardware (e.g. such as in a data center or CPE) where many hardware nodes work together and are managed via management and orchestration 1510, which, among others, oversees lifecycle management of applications 1502. In some embodiments, hardware 1504 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1512 which may alternatively be used for communication between hardware nodes and radio units.

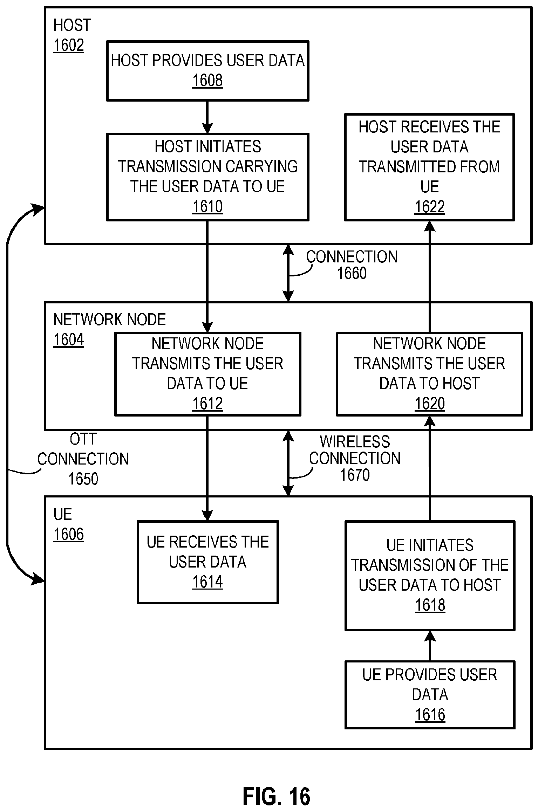

Fig. 16 shows a communication diagram of a host 1602 communicating via a network node 1604 with a UE 1606 over a partially wireless connection in accordance with some embodiments. Example implementations, in accordance with various embodiments, of the UE (such as a UE 1112a of Fig. 11 and/or UE 1200 of Fig. 12), network node (such as network node 1110a of Fig. 11 and/or network node 1300 of Fig. 13), and host (such as host 1116 of Fig. 11 and/or host 1400 of Fig. 14) discussed in the preceding paragraphs will now be described with reference to Fig. 16.

Like host 1400, embodiments of host 1602 include hardware, such as a communication interface, processing circuitry, and memory. The host 1602 also includes software, which is stored in or accessible by the host 1602 and executable by the processing circuitry. The software includes a host application that may be operable to provide a service to a remote user, such as the UE 1606 connecting via an over-the-top (OTT) connection 1650 extending between the UE 1606 and host 1602. In providing the service to the remote user, a host application may provide user data which is transmitted using the OTT connection 1650.

The network node 1604 includes hardware enabling it to communicate with the host 1602 and UE 1606. The connection 1660 may be direct or pass through a core network (like core network 1106 of Fig. 11) and/or one or more other intermediate networks, such as one or more public, private, or hosted networks. For example, an intermediate network may be a backbone network or the Internet.

The UE 1606 includes hardware and software, which is stored in or accessible by UE 1606 and executable by the UE's processing circuitry. The software includes a client application, such as a web browser or operator-specific "app" that may be operable to provide a service to a human or non-human user via UE 1606 with the support of the host 1602. In the host 1602, an executing host application may communicate with the executing client application via the OTT connection 1650 terminating at the UE 1606 and host 1602. In providing the service to the user, the UE's client application may receive request data from the host's host application and provide user data in response to the request data. The OTT connection 1650 may transfer both the request data and the user data. The UE's client application may interact with the user to generate the user data that it provides to the host application through the OTT connection 1650.

The OTT connection 1650 may extend via a connection 1660 between the host 1602 and the network node 1604 and via a wireless connection 1670 between the network node 1604 and the UE 1606 to provide the connection between the host 1602 and the UE 1606. The connection 1660 and wireless connection 1670, over which the OTT connection 1650 may be provided, have been drawn abstractly to illustrate the communication between the host 1602 and the UE 1606 via the network node 1604, without explicit reference to any intermediary devices and the precise routing of messages via these devices.

As an example of transmitting data via the OTT connection 1650, in step 1608, the host 1602 provides user data, which may be performed by executing a host application. In some embodiments, the user data is associated with a particular human user interacting with the UE 1606. In other embodiments, the user data is associated with a UE 1606 that shares data with the host 1602 without explicit human interaction. In step 1610, the host 1602 initiates a transmission carrying the user data towards the UE 1606. The host 1602 may initiate the transmission responsive to a request transmitted by the UE 1606. The request may be caused by human interaction with the UE 1606 or by operation of the client application executing on the UE 1606. The transmission may pass via the network node 1604, according to the teachings described throughout this disclosure. Accordingly, in step 1612, the network node 1604 transmits to the UE 1606 the user data that was carried in the transmission that the host 1602 initiated, in accordance with the teachings of the embodiments described throughout this disclosure. In step 1614, the UE 1606 receives the user data carried in the transmission, which may be performed by a client application executed on the UE 1606 associated with the host application executed by the host 1602.

In some examples, the UE 1606 executes a client application which provides user data to the host 1602. The user data may be provided in reaction or response to the data received from the host 1602. Accordingly, in step 1616, the UE 1606 may provide user data, which may be performed by executing the client application. In providing the user data, the client application may further consider user input received from the user via an input/output interface of the UE 1606. Regardless of the specific manner in which the user data was provided, the UE 1606 initiates, in step 1618, transmission of the user data towards the host 1602 via the network node 1604. In step 1620, in accordance with the teachings of the embodiments described throughout this disclosure, the network node 1604 receives user data from the UE 1606 and initiates transmission of the received user data towards the host 1602. In step 1622, the host 1602 receives the user data carried in the transmission initiated by the UE 1606.

One or more of the various embodiments improve the performance of OTT services provided to the UE 1606 using the OTT connection 1650, in which the wireless connection 1670 forms the last segment. More precisely, the teachings of these embodiments may improve the data rate, latency, power consumption and thereby provide benefits such as reduced user waiting time, better responsiveness, extended battery lifetime.

In an example scenario, factory status information may be collected and analyzed by the host 1602. As another example, the host 1602 may process audio and video data which may have been retrieved from a UE for use in creating maps. As another example, the host 1602 may collect and analyze real-time data to assist in controlling vehicle congestion (e.g., controlling traffic lights). As another example, the host 1602 may store surveillance video uploaded by a UE. As another example, the host 1602 may store or control access to media content such as video, audio, VR or AR which it can broadcast, multicast or unicast to UEs. As other examples, the host 1602 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 1650 between the host 1602 and UE 1606, in response to variations in the measurement results. The measurement procedure and/or the network functionality for reconfiguring the OTT connection may be implemented in software and hardware of the host 1602 and/or UE 1606. In some embodiments, sensors (not shown) may be deployed in or in association with other devices through which the OTT connection 1650 passes; the sensors may participate in the measurement procedure by supplying values of the monitored quantities exemplified above, or supplying values of other physical quantities from which software may compute or estimate the monitored quantities. The reconfiguring of the OTT connection 1650 may include message format, retransmission settings, preferred routing etc.; the reconfiguring need not directly alter the operation of the network node 1604. Such procedures and functionalities may be known and practiced in the art. In certain embodiments, measurements may involve proprietary UE signaling that facilitates measurements of throughput, propagation times, latency and the like, by the host 1602. The measurements may be implemented in that software causes messages to be transmitted, in particular empty or 'dummy' messages, using the OTT connection 1650 while monitoring propagation times, errors, etc.

## Claims

1. A method (100; 200) performed by a user equipment, UE (1200), the method comprising:
- receiving (110; 210; 505; 605; 705), from a first network node (1300), one or more inter-cell multiple Transmission Reception Point, mTRP, configurations, wherein each inter-cell mTRP configuration comprises (i) multiple Physical Cell Identities, PCIs, being different to one another compared to an initial Primary Cell, PCell, and (ii) multiple Cell-Radio Network Temporary Identities, C-RNTIs, being different to one another compared to the initial PCell;
- determining (120; 220; 530; 650; 735), from the received inter-cell mTRP configurations according to a selection function, at least one combination of one PCI and one C-RNTI enabling retrieving a UE context, wherein the selection function is based on selecting the at least one combination of one PCI and one C-RNTI only from the initial PCell, by selecting the PCI and the C-RNTI of the initial PCell; and
- transmitting (130; 240; 535; 655; 740) a radio resource control, RRC, re-establishment Request message to the second network node, the RRC re-establishment Request message comprising a UE identity comprising the selected at least one combination of one PCI and one C-RNTI.

2. The method of claim 1, further comprising storing the selected at least one combination of one PCI and one C-RNTI.

3. The method of claim 1 or 2, wherein the RRC re-establishment Request message is a resume request.

4. The method of any one of claims 1 to 3, wherein:
- the one or more inter-cell mTRP configurations comprise at least one combination of one PCI and one C-RNTI given by a PCell configuration and a Secondary cell, SCell, configuration; and/or
- each inter-cell mTRP configuration is provided as a cell configuration.

5. A User Equipment, UE (1200), comprising communication interfaces (1212) and processing circuitry (1202) connected thereto and configured to perform the method of any one of claims 1 to 4.

6. A computer program product comprising a non-transitory computer readable storage medium (1210) having computer readable program code embodied in the medium, the computer readable program code comprising computer readable program code to operate a user equipment, UE (1200), according to any of the methods of any one of claims 1 to 4.

## Patentansprüche

1. Verfahren (100; 200), das von einer Benutzereinrichtung, UE, (1200) durchgeführt wird, wobei das Verfahren Folgendes umfasst:
- Empfangen (110; 210; 505; 605; 705) einer oder mehrerer Konfigurationen mehrerer Interzellen-Sendeempfangspunkte, Interzellen-mTRP, von einem ersten Netzwerkknoten (1300), wobei jede Interzellen-mTRP-Konfiguration (i) mehrere physikalischen Zellenidentitäten, PCIs, die sich im Vergleich zu einer anfänglichen Primärzelle, PCell, voneinander unterscheiden, und (ii) mehrere temporäre Zellenfunknetzwerkidentitäten, C-RNTIs, umfasst, die sich im Vergleich zu der anfänglichen PCell voneinander unterscheiden;
- Bestimmen (120; 220; 530; 650; 735) mindestens einer Kombination aus einer PCI und einer C-RNTI aus den empfangenen Interzellen-mTRP-Konfigurationen, die das Abrufen eines UE-Kontexts ermöglicht, gemäß einer Auswahlfunktion, wobei die Auswahlfunktion darauf basiert, dass die mindestens eine Kombination aus einer PCI und einer C-RNTI nur aus der anfänglichen PCell ausgewählt wird, indem die PCI und die C-RNTI der anfänglichen PCell ausgewählt werden,
- Senden (130; 240; 535; 655; 740) einer Funkressourcensteuerungs-Wiederherstellungsanforderungsnachricht, RRC-Wiederherstellungsanforderungsnachricht, an den zweiten Netzwerkknoten, wobei die RRC-Wiederherstellungsanforderungsnachricht eine UE-Identität umfasst, die die ausgewählte mindestens eine Kombination aus einer PCI und einer C-RNTI umfasst.

2. Verfahren nach Anspruch 1, ferner umfassend Speichern der ausgewählten mindestens einen Kombination aus einer PCI und einer C-RNTI.

3. Verfahren nach Anspruch 1 oder 2, wobei die RRC-Wiederherstellungsanforderungsnachricht eine Wiederaufnahmeanforderung ist.

4. Verfahren nach einem der Ansprüche 1 bis 3, wobei:
- die eine oder die mehreren Interzellen-mTRP-Konfigurationen mindestens eine Kombination aus einer PCI und einer C-RNTI umfassen, die durch eine PCell-Konfiguration und eine Sekundärzellenkonfiguration, SCell-Konfiguration, gegeben ist; und/oder
- jede Interzellen-mTRP-Konfiguration als eine Zellenkonfiguration bereitgestellt wird.

5. Benutzereinrichtung, UE, (1200), umfassend Kommunikationsschnittstellen (1212) und Verarbeitungsschaltungsanordnung (1202), die damit verbunden und zum Durchführen des Verfahrens nach einem der Ansprüche 1 bis 4 konfiguriert ist.

6. Computerprogrammprodukt, umfassend ein nichttransitorisches computerlesbares Speichermedium (1210) mit computerlesbarem Programmcode, der in dem Medium enthalten ist, wobei der computerlesbare Programmcode computerlesbaren Programmcode umfasst, um eine Benutzereinrichtung, UE, (1200) gemäß einem der Verfahren nach einem der Ansprüche 1 bis 4 zu betreiben.

## Revendications

1. Procédé (100 ; 200) réalisé par un équipement utilisateur, UE (1200), le procédé comprenant :
- la réception (110 ; 210 ; 505 ; 605 ; 705), depuis un premier nœud de réseau (1300), d'une ou plusieurs configurations de multiples points d'émission-réception, mTRP, inter-cellules, dans lequel chaque configuration mTRP inter-cellules comprend (i) de multiples identités de cellules physiques, PCI, qui sont différentes les unes des autres par rapport à une cellule primaire, PCell, initiale et (ii) de multiples identités temporaires de réseau radio cellulaire, C-RNTI, qui sont différentes les unes des autres par rapport à la PCell initiale ;
- la détermination (120 ; 220 ; 530 ; 650 ; 735), à partir des configurations mTRP inter-cellules reçues selon une fonction de sélection, d'au moins une combinaison d'une PCI et d'une C-RNTI permettant la récupération d'un contexte d'UE, dans lequel la fonction de sélection est basée sur la sélection de l'au moins une combinaison d'une PCI et d'une C-RNTI uniquement à partir de la PCell initiale, par la sélection de la PCI et de la C-RNTI de la PCell initiale ; et
- la transmission (130 ; 240 ; 535 ; 655 ; 740) d'un message de demande de rétablissement de commande de ressources radio, RRC, au deuxième nœud de réseau, le message de demande de rétablissement de RRC comprenant une identité d'UE comprenant l'au moins une combinaison sélectionnée d'une PCI et d'une C-RNTI.

2. Procédé selon la revendication 1, comprenant en outre le stockage de l'au moins une combinaison sélectionnée d'une PCI et d'une C-RNTI.

3. Procédé selon la revendication 1 ou 2, dans lequel le message de demande de rétablissement de RRC est une demande de reprise.

4. Procédé selon l'une quelconque des revendications 1 à 3, dans lequel :
- les une ou plusieurs configurations mTRP inter-cellules comprennent au moins une combinaison d'une PCI et d'une C-RNTI donnée par une configuration de PCell et une configuration de cellule secondaire, SCell ; et/ou
- chaque configuration mTRP inter-cellules est fournie en tant qu'une configuration de cellule.

5. Equipement utilisateur, UE (1200), comprenant des interfaces de communication (1212) et une circuiterie de traitement (1202) qui leur est connectée et configurée pour réaliser le procédé selon l'une quelconque des revendications 1 à 4.

6. Produit de programme informatique comprenant un support de stockage non transitoire lisible par ordinateur (1210) dans lequel est stocké un code de programme lisible par ordinateur, le code de programme lisible par ordinateur comprenant un code de programme lisible par ordinateur pour exploiter un équipement utilisateur, UE (1200), selon l'un quelconque des procédés selon l'une quelconque des revendications 1 à 4.
